# EUROPEAN PATENT SPECIFICATION

(11) **EP 4 493 036 B1**
(45) Date of publication and mention of the grant of the patent: **22.04.2026**
(21) Application number: 23711126.5
(22) Date of filing: 02.03.2023
(51) Int. Cl.: A47L 9/28

(54) **DUST DISTRIBUTION MAPPING**
KARTIERUNG DER STAUBVERTEILUNG
CARTOGRAPHIE DE LA RÉPARTITION DES POUSSIÈRES

(30) Priority: 17.03.2022 GB 202203732
(43) Date of publication of application: 22.01.2025
(73) Proprietor: DYSON TECHNOLOGY LIMITED, Malmesbury Wiltshire SN16 0RP (GB)
(72) Inventor: CARSWELL, James, Malmesbury Wiltshire SN16 0RP (GB); ORD, Christopher, Malmesbury Wiltshire SN16 0RP (GB); ASHBEE, Giles, Malmesbury Wiltshire SN16 0RP (GB)
(74) Representative: Dyson IP Department
(86) International application number: PCT/GB2023/050487
(87) International publication number: WO 2023/175301

(56) References cited:
- WO-A1-2005/083541
- WO-A1-2019/097012
- US-A1- 2021 068 604
- US-A1- 2021 085 145
- US-A1- 2022 015 596

## Description

### TECHNICAL FIELD OF THE INVENTION

The present invention relates to a system for generating dust distribution data based on electrical signals generated by a piezoelectric sensor in a robotic vacuum cleaner. Equivalent methods and computer-implemented methods are also provided.

### BACKGROUND TO THE INVENTION

In regular households, and other buildings, dust particles are very small, to the point where it is very difficult, if not impossible to spot them with the naked eye. As a result, when performing cleaning operations such as vacuuming, a user essentially has to perform the task "blind". A similar problem may arise for automatic, robotic vacuum cleaners. Without any knowledge of the typically dustiest locations in a building, a robotic vacuum cleaner may unnecessarily expend power vacuuming locations within a building which rarely collect dust. It is therefore desirable to generate, and ultimately use, data which is indicative of the spatial distribution of dust particles on the floor of a building.

WO 2005/083541 discloses a piezoelectric debris sensor and associated signal processor responsive to debris strikes enable an autonomous cleaning device to detect the presence of debris and in response, to select a behavioural mode, operational condition or pattern of movement, such as spot coverage or the like.

### SUMMARY OF THE INVENTION

Broadly speaking, the present invention relates to methods and systems for generating a dust distribution map indicative of the distribution of dust particles across the floor of a house or other building, as determined during a cleaning operation of a robotic vacuum cleaner, by a piezoelectric sensor located in an airflow path of the robotic vacuum cleaner.

Specifically, the robotic vacuum cleaner is configured to determine dust particle size distribution data across a range of particle sizes.

More specifically, a first aspect of the present invention provides a system for generating dust particle size distribution data indicating the distribution of dust particles on the floor of a building, the system comprising: a robotic vacuum cleaner comprising: an airflow path having a piezoelectric sensor located therein, the piezoelectric sensor configured to generate a plurality of electrical signals in response to a respective plurality of vibrations, each vibration caused by a dust particle striking a detection region of the airflow path; and a location determination module configured to determine location information of the robotic vacuum cleaner within the building; and a data processing system, wherein: the data processing system is configured, based on the plurality of electrical signals, to generate dust particle size distribution data indicative of a size distribution of dust particles across the floor of the building.

The robotic vacuum cleaner is configured to execute a cleaning operation in which it traverses the floor of the building which performing some kind of cleaning action, such as vacuuming, dusting, wiping, or the like. Preferably, the cleaning operation is pre-planned, and may be retrieved from e.g. a memory of the robotic vacuum cleaner. In preferred cases, the cleaning action is vacuuming, in which dust particles on the floor are entrained in an airflow which causes them to be removed from the floor by suction, and deposited in a receptacle which forms part of the robotic vacuum cleaner. In some cases, the receptacle may be removable from the robotic vacuum cleaner. During this process, the dust particles move along the airflow path. By its nature as a robotic vacuum cleaner, it will be understood that the robotic vacuum cleaner includes some kind of means for generating a vacuum or negative pressure, thereby generating a suction force which causes air to flow from outside the robotic vacuum cleaner the airflow path. The means for generating a vacuum or negative pressure may be referred to as a vacuum generating component, and may comprise a motor. The speed of the motor (in e.g. revolutions per minute) is preferably proportional to, or correlates with, with the suction power. The higher the speed of the motor, the stronger the suction power. The speed of the motor may be controlled by controlling the power supply to the motor, wherein a greater amount of power supplied to the motor gives rise to a greater speed, and *vice versa.* There may be a plurality of predetermined power levels for the motor, each corresponding to a predetermined motor speed. Preferably, there are three predetermined power levels corresponding to three different motor speeds.

At any given time, the robotic vacuum cleaner may be configured to remove dust particles from a cleaning region of the floor. Specifically, the cleaning region of the floor, from which the dust particles are removed at the given time, may be the region of floor which is located beneath a cleaning region-defining assembly of the robotic vacuum cleaner. Evidently, the cleaning region-defining assembly is preferably located at a base of the robotic vacuum cleaner (herein, the term "base" is used to refer to a side or surface of the robotic vacuum cleaner which, during a cleaning operation, faces or engages the floor). The cleaning region-defining assembly preferably includes an enclosure having an open base, wherein at least an outer wall of the enclosure defines an edge of a cleaning region.

The enclosure preferably comprises an outer housing having a lower edge which is arranged to face the floor in use. Preferably, the lower edge is arranged to be spaced from the floor when the robotic vacuum cleaner is placed on the floor with the base facing the floor. This spacing ensures that air is able to pass into the enclosure from the outside. In some cases, the enclosure may contain a brush. In use, as the robotic vacuum cleaner moves across the floor, the brush may be configured to disturb or otherwise agitate dust that is located on the floor (specifically in the cleaning region of the floor), thereby causing the dust to be entrained in the moving air, and to pass into the airflow path. In preferred cases, the brush may be configured to rotate in use, improving the extent to which dust particles are disturbed, thereby ensuring that more dust particles can be entrained in the airflow, and can thus be vacuumed up. Such an enclosure may be referred to as a brush bar. The lower edge of the housing of the brush bar may define a generally rectangular cleaning region of the floor from which dust is removed at any given time. This may be referred to herein as a "brush bar area". Rotation of the brush may be controlled by a motor. The speed of the motor may be controlled by controlling the power supply to the motor, wherein a greater amount of power supplied to the motor gives rise to a greater speed, and *vice versa.* There may be a plurality of predetermined power levels for the motor, each corresponding to a predetermined motor speed. Preferably, there are three predetermined power levels corresponding to three different motor speeds.

Herein, "airflow path" refers to the route which moving air takes from the outside, to the receptacle, e.g. underneath the gap defined by the floor and lower edge of the outer wall of the enclosure/housing, then through the robotic vacuum cleaner into the receptacle. The airflow path preferably includes an air duct which is located in between, and in fluid communication with, both the enclosure and the receptacle. In preferred cases, the piezoelectric sensor is located within the air duct. As discussed previously, the piezoelectric sensor is configured to generate an electrical signal when a dust particle strikes a detection region of the airflow path. Herein, "detection region" refers to any region located sufficiently close to the piezoelectric sensor that dust particles striking it are able to generate an electrical signal. For example, the detection region may be a region of the piezoelectric sensor itself. Or, the detection region may comprise some or all of an inner surface of the air duct. It will be appreciated that meaningful data can be obtained by the piezoelectric sensor regardless of the precise geometry of the detection region, as long as the detection region remains constant throughout a cleaning operation or plurality of cleaning operations.

The piezoelectric sensor preferably comprises a piezoelectric crystal. It will be understood by the skilled person that a piezoelectric crystal has the property that an electrical charge accumulates in the material in response to applied mechanical stress. This means that a voltage may be generated in response to an impact giving rise to a vibration in the piezoelectric crystal. Thus, the electrical signal may be in the form of a voltage signal, though equivalently, a current signal or power signal could also be used. The electrical signal preferably comprises a plot of the change in electrical property with time (or comprises data representing this, e.g. by sampling the voltage across the piezoelectric signal at a plurality of time points). Preferably, a high sampling rate is used, at least 1,000 measurements per second, more preferably at least 5,000 measurements per second. More preferably still, the sampling rate is at least 10,000 measurements per second, and even more preferably around 15,000 measurements per second.

The first aspect of the invention requires that a data processing system is configured to generate dust particle size distribution data which is indicative of a size distribution of dust particles in different locations in the building. Herein, the "size distribution of dust particles across the floor of the building" may be understood to a refer to a distribution both in terms of the particle size and location. In other words, the dust particle size distribution data comprises information about the spread of dust particle sizes over different locations, or subdivisions of the floor. More specifically, "size distribution of dust particles" for a given subdivision of the floor may refer either to a number of dust particles, or to a total mass of dust particles in each of a plurality of predetermined size classes within that subdivision of the floor. The subdivisions may correspond to a plurality of cleaning regions which may be defined by the cleaning region-defining component, i.e. the subdivisions may each have an area corresponding to the area of the cleaning regions defined by the cleaning region-defining component of the robotic vacuum cleaner. In these cases, it is particularly preferably that the cleaning regions are rectangular, as this means that they are able to tessellate across the floor. The nature of the dust particle size distribution data will be discussed in more detail later in this application with reference to the manner in which it is generated.

The particle size classes may comprise one or more of the following: ultrafine dust particles, fine dust particles, medium dust particles, and coarse dust particles. The table below illustrates ranges for the upper and lower bounds of the particle size in each of these classes.

| **Class** | **Lower bound (µm)** | **Upper bound (µm)** |
|---|---|---|
| **Ultrafine** | 5 to 15 | 45 to 135 |
| **Fine** | 45 to 135 | 90 to 270 |
| **Medium** | 90 to 270 | 250 to 750 |
| **Coarse** | 250 to 750 | 1000 to 3000 |

Of course, in each case, the lower bound must be lower than the higher bound. In a preferred case, the following upper and lower bounds may be used.

| **Class** | **Lower bound (µm)** | **Upper bound (µm)** |
|---|---|---|
| **Ultrafine** | 10 | 90 |
| **Fine** | 90 | 180 |
| **Medium** | 180 | 500 |
| **Coarse** | 500 | 2000 |

Herein, the term "dust particle size" is defined in terms of an industry standard. Specifically, dolomite particles are used to define "particle size". It is assumed that particles are spherical in nature and have an average density of 2.7 g/cm³. The term "particle size" refers to the diameter of such a particle according to this definition. This in line with industrial standard IEC-60312 relating to vacuum cleaners for household use.

We now discuss ways in which the dust particle size distribution data may be generated by the data processing system.

Firstly, we discuss the determination of the dust particle size. The data processing system comprises a dust particle size determination module which is configured to determine the size and/or mass of the dust particles, based on at least the electrical signals by the piezoelectric sensor for each particle which strikes the detection region. Specifically, for each particle that strikes the detection region, the dust particle size determination module is configured to determine size information of that dust particle. Herein, "size information" may refer to the particle size itself, or may refer more broadly to the particle size class to which the dust particle belongs. For example, the dust particle size determination module may be configured to determine the size of the particle, and then to determine the particle size class based on the size of the particle. Alternatively, the particle size determination module may simply determine the particle size class immediately. Either approach is equally valid.

For each particle, the particle size determination module may be configured to determine the size information by applying a particle size determination algorithm to the electrical signal generated by the piezoelectric sensor in respect of that particle. As discussed, the output of the particle size determination algorithm may be the particle size itself, from which the particle size determination module is then configured to determine the particle size class. Or, the output of the particle size determination algorithm may be the particle size class itself. As discussed, either approach is equally valid. In some cases, the particle size determination algorithm may be configured to derive a particle momentum from the electrical signal, and to derive particle mass based on a knowledge of the airflow speed. Then, the volume of the particle may be estimated by assuming that the particle is spherical and has a predetermined density, for example 2.7 g/cm³. In these cases, the particle size may be taken as the diameter of the assumed spherical dust particle.

At the heart of generating a dust distribution map is acquiring data related to the spatial distribution of dust particles within the building. The system of the first aspect of the invention comprises a location determination module which is configured to determine location information of the robotic vacuum cleaner within the building. Herein, "location information" refers to data identifying the position of the robotic vacuum cleaner in the building. However, there are various ways in which the location determination module may be configured to determine the location information and to associate it with a given particle.

In one approach, when the robotic vacuum cleaner is located in a particular cleaning region (as defined previously), the location determination module may be configured to identify the cleaning region in which the robotic vacuum cleaner is located. It may do so e.g. based on identifying what stage of the planned cleaning operation the robotic vacuum cleaner is currently in, or it may detect the location e.g. using image data obtained by a camera.

During the cleaning operation, the robotic vacuum cleaner may be configured to clean each cleaning region. Then, when the robotic vacuum cleaner is in a first location, in which dust from a first cleaning region is being removed, the location determination module is configured to determine the location of the robotic vacuum cleaner (e.g. to note the location of the first cleaning region), and the particle size determination module is configured to determine the size information for each dust particle which strikes the detection region of the piezoelectric sensor. In these cases, after all of the dust has been removed from the floor at the first cleaning region, or after a predetermined amount of time, the data processor may be configured to determine the total number of dust particles in each of the particle size classes, based on the size information which has been determined. The data processing system may include a particle counter for this purpose. The dust particle size distribution data generated for the first cleaning region or the first location may thus comprise a total number of dust particles in each of the particle classes which are preferably stored in a memory of the robotic vacuum cleaner, in association with the first cleaning region or the location thereof. The robotic vacuum cleaner may then be configured to move to a second cleaning region, and the process may be repeated such that the dust particle size distribution data for the second cleaning region comprises a total number of dust particles in each of the particle classes which are preferably stored in a memory of the robotic vacuum cleaner, in association with the second cleaning region or the location thereof. The process may be repeated for each of a generalized plurality of cleaning regions so that the dust particle size distribution data for each of the plurality of cleaning regions comprises the number of particles in each of the particle size classes for that region.

The robotic vacuum cleaner may be configured to clean each cleaning region one at a time, i.e. it may travel to the first cleaning region, stop, and then travel to the second cleaning region. Alternatively, and preferably, the robotic vacuum cleaner may be configured to traverse the floor continuously.

In the cases discussed in the previous paragraph, the focus is on the total number of particles in each of the particle size classes for each cleaning region. However, in alternative cases, it is the total mass of dust particles which is of interest instead. In these cases, when the robotic vacuum cleaner is in a first location, in which dust from a first cleaning region is being removed, the location determination module is configured to determine the location of the robotic vacuum cleaner (e.g. to note the location of the first cleaning region), the particle size determination module is configured to determine the size information for each dust particle which strikes the detection region of the piezoelectric sensor, and a particle mass determination module may be configured to determine the mass of each particle which strikes the detection region of the piezoelectric sensor. In these cases, after all of the dust has been removed from the floor at the first cleaning region, or after a predetermined amount of time, the data processor may be configured to calculate the total mass of dust particles in each of the particle size classes, based on mass information which has been determined by the particle mass determination module.

The dust particle size distribution data generated for the first cleaning region may thus comprise a total mass of dust particles in each of the particle classes which are preferably stored in a memory of the robotic vacuum cleaner, in association with the first cleaning region or the location thereof. The robotic vacuum cleaner may then be configured to move to a second cleaning region, and the process may be repeated such that the dust particle size distribution data for the second cleaning region comprises a total mass of dust particles in each of the particle classes which are preferably stored in a memory of the robotic vacuum cleaner, in association with the second cleaning region or the location thereof. The process may be repeated for each of a generalized plurality of cleaning regions so that the dust particle size distribution data for each of the plurality of cleaning regions comprises the total of particles in each of the particle size classes for that region.

In some cases, in addition to the total mass of dust particles or total number of dust particles within each particle size class, it may be desirable to obtain the total number of particles or total mass of dust particles across all of the particle size classes. To that end, the data processing system may further comprise an addition module which is configured to calculate the total mass or total number of particles across all of the particle size classes, within a given cleaning region. This data may then be stored in a memory of the system.

In the scenarios given above, the cleaning regions of plurality of cleaning regions are predetermined, meaning that there is a fixed level of granularity in the dust particle size distribution data.

In a related case, the floor of the building may be divided into subdivisions which are smaller than the brush bar area, and therefore smaller than the cleaning regions. In these cases, during the cleaning operation the location determination module may be configured to determine which of the subdivisions are located within or beneath the cleaning region-defining assembly of the robotic vacuum cleaner at a given time, e.g. when the robotic vacuum cleaner is located in a first location. In other words, the location determination module is configured to determine which of the subdivisions are within the cleaning region at the time. This may be done based on location information of the robotic vacuum cleaner. At a given time, while the robotic vacuum cleaner is moving across the floor (continuously), the particle size determination module is configured to determine the size information for each dust particle which strikes the detection region of the piezoelectric sensor. Each of the subdivisions of the floor may have associated therewith a plurality of bins, each corresponding to one of the plurality of particle size classes. Then, for each particle which strikes the detection region of the piezoelectric sensor and for each subdivision of the floor which is in the cleaning region at the time that the dust particle strikes the detection region (i.e. the time when the dust particle is detected), a particle counter may be configured to increment a value associated with the bin corresponding to the determined particle size class. In this way, as the robotic vacuum cleaner moves around the floor, the value of each bin increases each time a dust particle is detected while the subdivision of the floor is in the cleaning region of the robotic vacuum cleaner. It should be noted that this process may apply regardless of whether the robotic vacuum cleaner moves continuously or in increments.

In a related case, either alternatively or additionally to the process described above, at a given time, while the robotic vacuum cleaner is moving across the floor, the particle size determination module is configured to determine the size information for each dust particle which strikes the detection region of the piezoelectric sensor, and the dust particle mass determination module is configured to determine the mass of each dust particle which strikes the detection region of the piezoelectric sensor. Each of the subdivisions of the floor may have associated therewith a plurality of bins, each corresponding to one of the plurality of particle size classes. Then, for each particle which strikes the detection region of the piezoelectric sensor and for each subdivision of the floor which is in the cleaning region at the time that the dust particle strikes the detection region (i.e. the time when the dust particle is detected), a cumulative mass determination module may be configured to increment a cumulative dust particle mass value associated with the bin corresponding to the determined particle size class. In this way, as the robotic vacuum cleaner moves around the floor, the cumulative dust particle mass value of each bin increases each time a dust particle is detected while the subdivision of the floor is in the cleaning region of the robotic vacuum cleaner. It should be noted that this process may apply regardless of whether the robotic vacuum cleaner moves continuously or in increments.

In the examples given above, the term "bin" does not refer to a physical bin, but rather refers to an area in which a value (in this case, the particle count or the cumulative mass of dust particles) is stored. This may correspond, for example, to a portion of a memory of the robotic vacuum cleaner or elsewhere on the system.

In other cases, the dust particle size distribution data may be generated in a different way, in order to enable more flexible granularity. Broadly speaking, rather than having predetermined cleaning regions, and determining the total mass or number of dust particles within each of these regions, when each dust particle is detected by the piezoelectric sensor, its particle size class and optionally its particle mass is recorded along with the location of the robotic vacuum cleaner when that particle was detected. Then, after the cleaning operation (or at any suitable point in time, the dust particle size distribution data may be generated by first defining a plurality of cleaning regions, and then by determining the total mass or number of dust particles in each particle size class, for each of the defined cleaning regions.

More specifically, in order to generate the dust particle size distribution data, for each dust particle detected by the piezoelectric sensor, the data processing system may be configured to determine the size information of the dust particle (in the same manner as has been outlined previously) and, optionally, the mass of the dust particle, and the location determination module may be configured to determine the location of the robotic vacuum cleaner when the dust particle was detected. This data may then be stored, e.g. on a memory of the robotic vacuum cleaner. The data processing system may further be configured to generate or otherwise define a plurality of cleaning regions or area subdivisions, and to determine the total number of dust particles in each particle size class, or the total mass of dust particles in each particle size class, for each of the defined cleaning regions or area subdivisions. As before, an addition module of the data processing system may then be configured to calculate the total number of dust particles or total mass of dust particles across all of the particle size classes.

Throughout this application, "dust particle size distribution data" can refer either to the total mass or total number of dust particles distributed into the different particle size classes, for each of the cleaning regions or area subdivisions, or the total mass or total number of dust particles summed over the different particle size classes, for each of the cleaning regions or area subdivisions.

Before discussing generation of a dust distribution map in more detail, we consider in more detail the physical components of the system, and where each step performed by the system takes place. The data processing system may be located on the robotic vacuum cleaner, and all of the features discussed above may therefore take place on the robotic vacuum cleaner, without recourse to external servers and the like. However, in preferred cases, in order to avoid the need for vast amounts of data to be stored in a memory of the robotic vacuum cleaner, the system may further comprise, or be in communication (e.g. via a network) with a cloud computing server. In such cases, the data processing system may be a distributed data processing system comprising a first data processor located on the robotic vacuum cleaner and a second data processor located on a cloud computing server. The first data processor may comprise the particle size determination module, and the particle mass determination module, and optionally the location determination module. The addition module may be located on either the first data processor or the second data processor. The cloud computing server may comprise a memory configured to store the dust particle size distribution data.

In those implementations in which the dust particle size distribution data is generated on the first processor on the robotic vacuum cleaner, but further processing takes place on the second data processor (e.g. at a cloud computing server) or the dust particle size distribution data is stored on the memory of the cloud computing server, it is necessary first to move the dust particle size distribution data from the robotic vacuum cleaner to the cloud computing server. Accordingly, the robotic vacuum cleaner, preferably comprises a memory (preferably a temporary memory in the form of a buffer memory or a cache), and the first data processor is configured to send the generated dust particle size distribution data to the memory for (temporary) storage after it has been generated. Alternatively, the robotic vacuum cleaner may comprise a temporary memory and a persistent memory, and the robotic vacuum cleaner may be configured to send the data stored in the temporary memory to the persistent memory.

The moment at which the contents of the memory of the robotic vacuum cleaner are transmitted to the memory of the cloud computing server may be determined in a number of ways:
- The floor of the building may be divided into a plurality of zones, each zone corresponding to e.g. a room in the building. According to a cleaning plan, the robotic vacuum cleaner may be configured to clean the zones in sequence. In some cases, the first data processor may be configured to send the data stored in the memory of the robotic vacuum cleaner to the cloud computing server after it has cleaned each zone.
- Similarly, the floor of the building may be divided into a plurality of fixed size grids. Each grid may, for example be 1.5m by 1.5m, but there is no requirement that the grid we a square grid. According to a cleaning plan, the robotic vacuum cleaner may be configured to clean the grids in succession. In some cases, the first data processor may be configured to send the data stored in the memory of the robotic vacuum cleaner to the cloud computing server after it has cleaned each grid.
- Similarly to the above two cases, the robotic vacuum cleaner may be configured to send the data stored in the memory of the robotic vacuum cleaner to the cloud computing server after each cleaning region (defined previously) has been cleaned.
- In some cases, the robotic vacuum cleaner may be configured to send the data stored in the memory of the robotic vacuum cleaner to the cloud computing server only after a whole cleaning operation is completed, e.g. when all zones and/or all grids have been cleaned, in accordance with the cleaning plan.
- In some cases, the robotic vacuum cleaner may be configured to send the data stored in the memory of the robotic vacuum cleaner to the cloud computing server at predetermined time intervals. The time intervals are preferably fixed.
- In some cases, the first data processor of the robotic vacuum cleaner may be configured to send the data to the cloud computing server continuously as the data is generated.

In some cases, the frequency with which the dust particle size distribution data is transmitted to the cloud computing server is selectable by a user, e.g. via an application on the client device.

We have now explained how the dust particle size distribution data is generated by the data processing system. As discussed previously, aspects of the first aspect of the invention are particularly effective for generating dust particle size distribution data for use in generating dust distribution maps. We therefore now consider the steps which lead to the generation of a dust distribution map. At a high level, the data processing system may be configured to generate, based on the dust particle size distribution data, instructions which, when executed by a processor of a client device, cause a display component of the client device to display a dust distribution map visually representative of the dust particle size distribution data.

The data processing system may be configured to receive a request for a dust distribution map, and to generate the instructions in response to receiving the request for a dust distribution map. Specifically, in some cases, the first data processor, on the robotic vacuum cleaner, may be configured to receive the request for the dust distribution map. Or, alternatively, the second data processor, on a cloud computing server may be configured to receive the request for the dust distribution map.

In implementations in which the dust particle size distribution data is stored on the robotic vacuum cleaner, the first data processor is preferably configured to receive the request for the dust distribution, and correspondingly, the first data processor is preferably configured to generate the instructions in response to the request. In other implementations, in which the dust particle size distribution data is stored externally, i.e. on a cloud computing server, if the robotic vacuum cleaner is configured to receive the request for the dust distribution map, it is preferably also configured to transmit that request to the second data processor on the cloud computing server. The request may then subsequently be received by the second data processor, and the second data processor may be configured to generate the instructions in response to the request. Alternatively, or additionally, the second data processor at the cloud computing server may be configured to receive the request for the dust distribution map and to generate the instructions in response to the request.

After the instructions have been generated, the data processing module is preferably configured to transmit the instructions to the client device, whereupon a processor of the client device is preferably configured to execute the instructions. As a result of executing the instructions, a display component of the client device is preferably configured to display a dust distribution map representative of the dust particle size distribution data.

We now discuss the dust distribution map which may be generated and displayed on the display component of the client device. The dust distribution map is a visual representation of the dust particle size distribution data. The dust distribution map may be a visual representation of spatial distribution of the total mass or total number of dust particles across all particle sizes. Or, the dust distribution map may be a visual representation of a spatial distribution of the total mass or total number of dust particles in a given particle size class (or in each of a plurality of the particle size classes). The dust distribution map may be in the form of a heat map, in which different colours are used to indicate different values. Rather than displaying the absolute total number or the absolute total mass of dust particles (either across all particle size classes, or within each particle size class), the dust distribution map may provide a visual representation of the total mass or total number of dust particles per unit area. Calculation or determination of the total mass or total number of dust particles per unit area may take place during the generation of the dust particle size distribution data (performed e.g. by the data processing system, then first data processor or the second data processor). Alternatively, the determination or calculation of the total mass or total number of dust particles per unit area may take place during generation of the instructions (again, performed e.g. by the data processing system, the first data processor or the second data processor).

The first aspect of the invention focuses on a system for generation dust particle size distribution data. A corresponding second aspect of the invention provides a method of generating dust particle size distribution data indicating the distribution of dust particles on the floor of a building, the method comprising: during a cleaning operation of a robotic vacuum cleaner, generating, by a piezoelectric sensor, a plurality of electric signals in response to a respective plurality of vibrations, each vibration caused by a dust particle striking a detection region of an airflow path of the robotic vacuum cleaner; determining location information indicating a location of the robotic vacuum cleaner within the building; and generating, based on the plurality of electrical signals and the determined location information, dust particle size distribution data indicative of a size distribution of dust particles across the floor of the building. It will be readily appreciated that methods according to the second aspect of the invention achieve the same technical effects as the system of the first aspect of the invention.

Optional features of the first aspect of the invention apply equally well to the second aspect of the invention, except where clearly incompatible, or where context clearly dictates otherwise. Various optional features are set out explicitly below, but it should be noted that the features set out previously still apply.

The method may further comprise executing, by the robotic vacuum cleaner, a cleaning operation in which it traverses the floor of the building which performing some kind of cleaning action, such as vacuuming, dusting, wiping, or the like. Preferably, the cleaning operation is pre-planned, and the method may comprise retrieving a cleaning plan from e.g. a memory of the robotic vacuum cleaner. In preferred cases, the cleaning action is vacuuming, in which dust particles on the floor are entrained in an airflow which causes them to be removed from the floor by suction, and deposited in a receptacle which forms part of the robotic vacuum cleaner. In some cases, the receptacle may be removable from the robotic vacuum cleaner. During this process, the dust particles move along the airflow path. By its nature as a robotic vacuum cleaner, it will be understood that the robotic vacuum cleaner includes some kind of means for generating a vacuum or negative pressure, thereby generating a suction force which causes air to flow from outside the robotic vacuum cleaner the airflow path.

Executing the cleaning operation, may comprise, at any given time, removing dust particles from a cleaning region of the floor. Specifically, the cleaning region of the floor, from which the dust particles are removed at the given time, may be the region of floor which is located beneath a cleaning region-defining assembly of the robotic vacuum cleaner, as defined in detail earlier in this application, with reference to the first aspect of the invention.

We now discuss in more detail the step of generating the dust particle size distribution data.

Firstly, we discuss the determination of the dust particle size. For each particle that strikes the detection region, the method may comprise a step of determining size information of that particle, where "size information" takes the same meaning as earlier in the application. For example, the method may comprise determining the size of the particle, and then determining the particle size class, based on the determined size. Alternatively, the method may comprise determining the particle size class immediately. Either approach is equally valid.

Determining the size information of the dust particle may comprise applying a particle size determination algorithm to the electrical signal which is generated in respect of that particle. As discussed, the output of the particle size determination algorithm may be the particle size itself, from which the particle size determination module is then configured to determine the particle size class. Or, the output of the particle size determination algorithm may be the particle size class itself. As discussed, either approach is equally valid.

The method of the second aspect of the invention comprises determining the location of the robotic vacuum cleaner within the building. However, there are various ways in which this may be performed, and in which the location information may be associated it with a given particle.

In one approach, when the robotic vacuum cleaner is located in a particular cleaning region (as defined previously), determining location information indicating a location of the robotic vacuum cleaner may comprise identifying the cleaning region in which the robotic vacuum cleaner is located, e.g. based on identifying what stage of the planned cleaning operation the robotic vacuum cleaner is currently in. Alternatively, the method may comprise detecting the location e.g. using image data obtained by a camera. During the cleaning operation, the method may comprise cleaning, by the robotic vacuum cleaner, each cleaning region one at a time (i.e. moving to the cleaning region, vacuuming, then moving on). In these cases, when the robotic vacuum cleaner is in a first location, in which dust from a first cleaning region is being removed, the method may comprise determining the location of the robotic vacuum cleaner (e.g. to note the location of the first cleaning region), and determining the size information for each dust particle which strikes the detection region of the piezoelectric sensor. In these cases, after all of the dust has been removed from the floor at the first cleaning region, or after a predetermined amount of time, the method may further comprise determining the total number of dust particles in each of the particle size classes, based on the size information. The dust particle size distribution data generated for the first cleaning region may thus comprise a total number of dust particles in each of the particle classes which are preferably stored in a memory of the robotic vacuum cleaner, in association with the first cleaning region or the location thereof. The method may comprise the robotic vacuum cleaner moving to a second cleaning region, and repeating the process such that the dust particle size distribution data for the second cleaning region comprises a total number of dust particles in each of the particle classes which are preferably stored in a memory of the robotic vacuum cleaner, in association with the second cleaning region or the location thereof. The method may comprise repeating these steps for each of a generalized plurality of cleaning regions so that the dust particle size distribution data for each of the plurality of cleaning regions comprises the number of particles in each of the particle size classes for that region.

In the cases discussed in the previous paragraph, the focus is on the total number of particles in each of the particle size classes for each cleaning region. However, in alternative cases, it is the total mass of dust particles which is of interest instead. In these cases, when the robotic vacuum cleaner is in a first location, in which dust from a first cleaning region is being removed, the method may comprise determining the location of the robotic vacuum cleaner (e.g. to note the location of the first cleaning region), and determining the size information for each dust particle which strikes the detection region of the piezoelectric sensor, and a determining the mass of each particle which strikes the detection region of the piezoelectric sensor. In these cases, after all of the dust has been removed from the floor at the first cleaning region, or after a predetermined amount of time, the method may comprise calculating the total mass of dust particles in each of the particle size classes, based on mass information which has been determined by the particle mass determination module. The dust particle size distribution data generated for the first cleaning region may thus comprise a total mass of dust particles in each of the particle classes which are preferably stored in a memory of the robotic vacuum cleaner, in association with the first cleaning region or the location thereof. The method may further comprise the robotic vacuum cleaner moving to a second cleaning region, and repeating the process such that the dust particle size distribution data for the second cleaning region comprises a total mass of dust particles in each of the particle classes which are preferably stored in a memory of the robotic vacuum cleaner, in association with the second cleaning region or the location thereof. The method may further comprise repeating these steps for each of a generalized plurality of cleaning regions so that the dust particle size distribution data for each of the plurality of cleaning regions comprises the total of particles in each of the particle size classes for that region.

In some cases, in addition to the total mass of dust particles or total number of dust particles within each particle size class, it may be desirable to obtain the total number of particles or total mass of dust particles across all of the particle size classes. To that end, the method may further comprise calculating the total mass or total number of particles across all of the particle size classes, within a given cleaning region. The method may further comprise storing in a memory of the system.

In the scenarios given above, the cleaning regions of plurality of cleaning regions are predetermined, meaning that there is a fixed level of granularity in the dust particle size distribution data. In other cases, the dust particle size distribution data may be generated in a different way, in order to enable more flexible granularity. Broadly speaking, rather than having predetermined cleaning regions, and determining the total mass or number of dust particles within each of these regions, when each dust particle is detected by the piezoelectric sensor, its particle size class and optionally its particle mass is recorded along with the location of the robotic vacuum cleaner when that particle was detected. Then, after the cleaning operation (or at any suitable point in time, the dust particle size distribution data may be generated by first defining a plurality of cleaning regions, and then by determining the total mass or number of dust particles in each particle size class, for each of the defined cleaning regions.

More specifically, in order to generate the dust particle size distribution data, for each dust particle detected by the piezoelectric sensor, the method may comprise determining the size information of the dust particle (in the same manner as has been outlined previously) and, optionally, the mass of the dust particle, and determining the location of the robotic vacuum cleaner when the dust particle was detected. The method may then comprise storing the information, e.g. on a memory of the robotic vacuum cleaner. The method may further comprise generating or otherwise defining a plurality of cleaning regions or area subdivisions, and determining the total number of dust particles in each particle size class, or the total mass of dust particles in each particle size class, for each of the defined cleaning regions or area subdivisions. As before, the method may further comprise calculating the total number of dust particles or total mass of dust particles across all of the particle size classes.

In the discussion of the first aspect of the invention, we described a first data processor located on the robotic vacuum cleaner and a second data processor located on a cloud computing server. It will be appreciated that the same optional features apply here *vis à vis* where the various method steps take place.

In those implementations in which the dust particle size distribution data is generated on the first processor on the robotic vacuum cleaner, but further processing takes place on the second data processor (e.g. at a cloud computing server) or the dust particle size distribution data is stored on the memory of the cloud computing server, it is necessary first to move the dust particle size distribution data from the robotic vacuum cleaner to the cloud computing server. Accordingly, the robotic vacuum cleaner, preferably comprises a memory (preferably a temporary memory in the form of a buffer memory or a cache), and the method further comprises sending, by the first data processor, the generated dust particle size distribution data to the memory for (temporary) storage after it has been generated. Alternatively, the robotic vacuum cleaner may comprise a temporary memory and a persistent memory, and the method may further comprise sending, by the robotic vacuum cleaner, the data stored in the temporary memory to the persistent memory.

The moment at which the contents of the memory of the robotic vacuum cleaner are transmitted to the memory of the cloud computing server may be determined in a number of ways:
- The floor of the building may be divided into a plurality of zones, each zone corresponding to e.g. a room in the building. According to a cleaning plan, the robotic vacuum cleaner may be configured to clean the zones in succession. In some cases, the first data processor may be configured to send the data stored in the memory of the robotic vacuum cleaner to the cloud computing server after it has cleaned each zone.
- Similarly, the floor of the building may be divided into a plurality of fixed size grids. Each grid may, for example be 1.5m by 1.5m, but there is no requirement that the grid we a square grid. According to a cleaning plan, the robotic vacuum cleaner may be configured to clean the grids in succession. In some cases, the first data processor may be configured to send the data stored in the memory of the robotic vacuum cleaner to the cloud computing server after it has cleaned each grid.
- Similarly to the above two cases, the robotic vacuum cleaner may be configured to send the data stored in the memory of the robotic vacuum cleaner to the cloud computing server after each cleaning region (defined previously) has been cleaned.
- In some cases, the robotic vacuum cleaner may be configured to send the data stored in the memory of the robotic vacuum cleaner to the cloud computing server only after a whole cleaning operation is completed, e.g. when all zones and/or all grids have been cleaned, in accordance with the cleaning plan.
- In some cases, the robotic vacuum cleaner may be configured to send the data stored in the memory of the robotic vacuum cleaner to the cloud computing server at predetermined time intervals. The time intervals are preferably fixed.
- In some cases, the first data processor of the robotic vacuum cleaner may be configured to send the data to the cloud computing server continuously as the data is generated.

In some cases, the frequency with which the dust particle size distribution data is transmitted to the cloud computing server is selectable by a user, e.g. via an application on the client device.

We have now explained how the dust particle size distribution data is generated by the data processing system in the context of the second aspect of the invention. We now consider the steps which lead to the generation of a dust distribution map. At a high level, the method may further comprise generating, based on the dust particle size distribution data, instructions which, when executed by a processor of a client device, cause a display component of the client device to display a dust distribution map visually representative of the dust particle size distribution data.

In order to effect this process, the method may further comprise receiving a request for a dust distribution map, and generating the instructions in response to receiving the request for a dust distribution map. Specifically, the first data processor may receive the request for the dust distribution map. Alternatively, the second data processor may receive the request for the dust distribution map.

In implementations in which the dust particle size distribution data is stored on the robotic vacuum cleaner, the method may comprise receiving, by the first data processor the request for the dust distribution map, and correspondingly, generating, by the first data processor, the instructions in response to the request. In other implementations, in which the dust particle size distribution data is stored externally, i.e. on a cloud computing server, if the method comprises receiving, by the robotic vacuum cleaner, the request for the dust distribution map, it preferably also comprises transmitting, by the first data processor, that request to the second data processor on the cloud computing server. The request may then subsequently be received by the second data processor, and the second data processor may to generate the instructions in response to the request. Alternatively, or additionally, the second data processor at the cloud computing server may receive the request for the dust distribution map and generate the instructions in response to the request.

After the instructions have been generated, the method may further comprise transmitting the instructions to the client device, whereupon a processor of the client device may execute the instructions. As a result of executing the instructions, a display component of the client device may display a dust distribution map representative of the dust particle size distribution data.

The optional features set out earlier, with respect to the nature of the dust distribution map, apply equally well to the second aspect of the invention.

Similar to a second aspect of the invention, a third aspect of the invention may provide a method of generating dust particle size distribution data indicating the distribution of dust particles on the floor of a building, the method comprising: receiving from a piezo electric sensor, a plurality of electric signals generated in response to a respective plurality of vibrations, each vibration caused by a dust particle striking a detection region of an airflow path of a robotic vacuum cleaner; receiving location information indicating a location of the robotic vacuum cleaner within the building; and generating, based on the plurality of electrical signals and the determined location information, dust particle size distribution data indicative of a size distribution of dust particles across the floor of the building. The method of the third aspect of the invention may be a computer-implemented method. It will be appreciated that the optional features set out above with reference to the first and second aspects of the invention apply equally well to the third aspect of the invention except where clearly incompatible, or where context clearly dictates otherwise.

After the dust distribution map has been generated, it may subsequently be used to inform control decisions, and more specifically, automatically to plan a subsequent cleaning operation.

Specifically, a further aspect of the present invention provides a computer-implemented method of controlling the operation of a robotic vacuum cleaner, the computer-implemented method comprising: receiving dust distribution data indicating the spatial distribution of dust particles across the floor of a building; and planning a cleaning operation of the floor of the building to be executed by the robotic vacuum cleaner, based on the received dust distribution data.

A cleaning operation may be defined by a planned cleaning route, i.e. a path in which the robotic vacuum cleaner should traverse the floor of a room, or e.g. the whole floor of a building. A memory of the robotic vacuum cleaner may store a map of the floor of the building (or more precisely, data representative of a map of the floor of the building). The floor of the building may be divided into a plurality of zones, each zone representing a room of a part of a room. The floor of the building may also be divided into a plurality of grid elements. Herein, "grid elements" may be generated simply by overlaying a grid onto the map of the floor of the building. In some cases, the grid may be a simple square lattice with each grid element being identical. Alternatively, the grid may be irregular. Planning a cleaning operation may comprise determining which zones and/or grid elements should be traversed, and in what order. More specifically, planning a cleaning operation may comprise generating data specifying which zones and/or grid elements are to be traversed, and/or in what order. Each grid element and/or zone may have an associated identifier for this purpose. Throughout this application, the term "location" may be used to describe a grid element or a zone, for conciseness. A zone may comprise one or more grid elements. Planning the cleaning operation may comprise determining an order in which the locations are visited by the robotic vacuum cleaner, the order of locations being determined based on the received dust distribution data. In some cases, it is it may be preferably to prioritize the locations containing the most dust. Accordingly, planning the cleaning operation may comprise ranking the locations in order of the amount of dust, and generating instructions which, when executed by a processor of the robotic vacuum cleaner, cause it to visit the locations in the order of decreasing amount of dust. Herein, "amount of dust" may refer to the total mass or total number of dust particles, optionally per unit area, for a given location.

A cleaning operation may additionally be defined by one or more operating parameters. In the context of the present application, the term "operating parameter" refers to a value or description which defines how (or to what extent) the robotic vacuum cleaner performs a given action. This will be elucidated later on when we come to specify examples of operating parameters. In such cases, planning the cleaning operation may comprise generating (or otherwise determining) one or more operating parameters, the one or more operating parameters being generated based on the received dust distribution data. Different operating parameters may be generated for different locations of the floor. Accordingly, generating the one or more operating parameters may comprise, for each of a plurality of locations of the floor of a building, generating a respective value of the one or more operating parameters. In these cases, the value of the operating parameter for each of the plurality of locations of the floor may be generated based on the dust distribution data associated with the respective location. For example, this may comprise generating data, the data comprising an indication of one or more operating parameters for each of a plurality of location identifiers, each location identifier corresponding to a respective location of the floor of the building. For example, based on a total mass or total number of dust particles (optionally, per unit area), generating the data may comprise generating one or more operating parameters per grid element, or per zone. Generally, the operating parameters will be selected such that the areas which typically include the most dust experience a greater degree of cleaning. This will become clearer when we discuss specific operating parameters.

A first example of an operating parameter which may be controlled based on the dust distribution data is suction power. Specifically, in preferred cases, the suction power is selected to be higher in a location with a relatively higher amount of dust than in a location with a relatively lower amount of dust, according to the received dust distribution data. Herein, "amount of dust" should be interpreted as described previously. Based on the amount of dust in a given location, generating the operating parameter may comprise selecting a power level to be supplied to the motor when the robotic vacuum cleaner is in that location. In line with previous disclosure, this may comprise either selecting from a continuous range of power values, or from a predetermined (discrete) set of power values. For completeness, we note that a higher power is preferably selected in a region with a relatively higher amount of dust than, and a lower power is preferably selected in a region with a relatively lower amount of dust. This ensure that the dustiest regions are cleaned with the greatest suction power.

A second operating parameter which may be controlled based on the dust distribution data is the rate of rotation of the brush within the enclosure. Specifically, in preferred cases, the rate of rotation of the brush bar is selected to be higher in a location with a relatively higher amount of dust than in a location with a relatively lower amount of dust, according to the received dust distribution data. Based on the amount of dust in a given location, generating the operating parameter may comprise selecting a power level to be supplied to the motor when the robotic vacuum cleaner is in that location. In line with previous disclosure, this may comprise either selecting from a continuous range of power values, or from a predetermined (discrete) set of power values. For completeness, we note that a higher power is preferably selected in a region with a relatively higher amount of dust than, and a lower power is preferably selected in a region with a relatively lower amount of dust. This ensures that the dustiest regions are cleaned with the brush bar rotating at the greatest speed.

A third operating parameter which may be controlled based on the dust distribution data is the cleaning speed. In the context of the present invention, the term "cleaning speed" refers to the speed at which the robotic vacuum cleaner moves through a given location. If the cleaning speed is higher, the robotic vacuum cleaner will spend less time at each cleaning region (as defined previously), and therefore that cleaning region will be cleaned less thoroughly. If the cleaning speed is lower, the robotic vacuum cleaner will spend more time at each cleaning region, and therefore that cleaning region will be cleaned more thoroughly. Accordingly, in preferred cases, the cleaning speed is selected to be lower in a location with a relatively higher amount of dust than in a location with a relatively lower amount of dust, according to the received dust distribution data. Alternatively, but largely equivalently, the operating parameter may be the amount of time the robotic vacuum cleaner spends in a given location, for example the amount of time the robotic vacuum cleaner spends in each cleaning region. Accordingly, in preferred cases, the amount of time spent in a location is selected to be higher in a location with a relatively higher amount of dust than in a location with a relatively lower amount of dust, according to the received dust distribution data.

Planning a cleaning operation may comprise generating a cleaning plan. The cleaning plan may comprise instructions which, when executed by a processor of the robotic vacuum cleaner, cause the robotic vacuum cleaner to execute a cleaning operation defined by the cleaning plan. The cleaning plan may comprise an ordered list of locations within the floor of the building (the ordering defining the order in which locations are to be traversed by the robotic vacuum cleaner), and for each location, one or more operating parameters to be used at that location. More specifically, planning a cleaning operation may comprise generating data representing a cleaning plan as formulated above. In some cases, the computer-implemented method may comprise receiving a request for a cleaning plan, in response to which the step of generating the cleaning plan or planning a cleaning operation takes place. In some cases, the request may include various parameters which limit the plan. For example, the request may include a total length of time for the cleaning operation. Or, the request may include an instruction only to clean those areas which have the highest amount of dust.

The disclosure above relates to the planning of a single cleaning operation. However, the computer-implemented method of the first aspect of the invention may go further than this, and include an automatic scheduling capability, based on the dust distribution data. Specifically, the computer-implemented method may comprise planning a plurality of cleaning operations, based on the received dust distribution data. In this case, a further operating parameter may be the frequency with which a given location is cleaned by the robotic vacuum cleaner. The frequency may be defined in terms of the number of cleans in a given time period. Alternatively, or additionally, the frequency may be defined in terms of the proportion of cleaning operations in which the given location is cleaned by the robotic vacuum cleaner. The frequency is preferably selected to be higher in a region with a relative higher amount of dust than in a region with a relatively lower amount of dust, according to the received dust distribution map. For example, some regions which are identified generally to have only a small amount of dust may only be cleaned in every other cleaning operation, or once every two weeks, rather than once every week. In some cases, there may be a plurality of defined cleaning plans or planned cleaning operations, and planning a plurality of cleaning operations may comprise determining which predetermined planned cleaning operation should take place at which times. Each of the plurality of defined cleaning plans are preferably based on dust distribution data, and may each have an associated plan ID. Planning the cleaning operation, accordingly, may comprise assigning a plan ID to each of a plurality of e.g. days or other cleaning sessions. For example, a user may specify that they would like a cleaning session to take place every day, in which case a plan ID may be assigned to each day.

In the above, the focus has been on generating operating parameters based on the total amount of dust, i.e. the total mass or total number of dust particles in a given location. However, it will be appreciated that the generation of operating parameters or determination of a cleaning path may be based on not only the total amount of dust but also the amount of dust in each of the particle size classes. The operating parameters may further be selected based on the floor type. For example, large dust particles are better picked up using a slower brush bar rotation speed, in order to ensure that the airflow is able to entrain the moving dust particle (which may otherwise have too much kinetic energy to be entrained in the airflow). In contrast, smaller particles often require more agitation to be lifted from the floor, since it is often more embedded, and represents a smaller target for the bristles of the brush to reach. So, a higher brush bar rotation speed is preferable in areas in which there are a lot of smaller dust particles. On hard floors, a higher brush bar rotation speed tends to be better; whereas on carpet, sometimes it is necessary to give the carpet fibres more time to relax each time they are contacted by the bristles of the brush bar, so a lower brush bar rotation speed may be preferable.

The table below shows an example of relative values of suction power, brush bar rotation speed and cleaning speed which may be preferable for particular floor types and dominant dust particle sizes.

| **Floor Type** | **Particle Size** | **Optimum Suction Power** | **Optimum brush bar rotation speed** | **Robot speed** |
|---|---|---|---|---|
| Carpet | Small | High | Low/Medium | Normal |
| Hardfloor | Small | High | High | Low |
| Carpet | Large | Medium | Low | Low |
| Hardfloor | Large | Large | Low | Normal |

Herein, the terms should be treated as relative rather than absolute. The subject-matter shown in columns 3 to 5 should also be treated as independent from each other, i.e. for a carpet with small dust particles, an optimal suction power may be high, but this need not be in combination with a low/medium relative brush bar rotation speed or a normal robot speed. In other words the table could be separated into three separate, independent tables: one comprising columns 1, 2, 3; one comprising columns 1, 2, 4; and one comprising columns 1, 2, 5.

This aspect of the invention relates to a computer-implemented method. However, it will be appreciated that a system executing such a computer-implemented method also provides the same advantages. Accordingly, a still further aspect of the invention provides a robotic vacuum cleaner system comprising a processor, the processor configured to execute the computer-implemented method of the first aspect of the invention. The optional features set out in association with the first aspect of the invention clearly also apply to the computer-implemented method executed by the system of the second aspect of the invention, and will not be repeated here, for conciseness.

The previous two aspects of the invention are directed towards computer-implemented methods by which a cleaning operation, or parts thereof, are planned automatically, based on received dust distribution data. In a further aspect of the invention, a dust distribution map may be used to allow a user to plan a cleaning operation themselves. This represents another way in which control of a cleaning operation may be based on dust distribution data, this time in the form of a dust distribution map. Specifically, this aspect of the invention provides a computer-implemented method of controlling a robotic vacuum cleaner using a client device, the computer-implemented method comprising: receiving, by the client device, a dust distribution map indicating the distribution of dust particles on the floor of a building; displaying the dust distribution map on a display component of the client device; receiving a user input corresponding to selected locations of the dust distribution map, the selected locations being locations to be cleaned by the robotic vacuum cleaner; generating, based on the received user input, instructions, which when executed by a processor of the robotic vacuum cleaner, are configured to cause the robotic vacuum cleaner to clean the locations of a floor of a building corresponding to the selected locations of the dust distribution map. In some cases, receiving the user input comprises receiving the user input via a touchscreen of the client device. A further aspect of the invention provides a system configured to execute the computer-implemented method of this aspect of the invention.

Another fifth aspect of the invention provides a computer-implemented method of monitoring the dust distribution on the floor of a building, the computer-implemented method comprising: receiving dust distribution data indicating the distribution of dust particles on the floor of a building; comparing the dust distribution data with expected dust distribution data, based on stored dust distribution data, to determine a deviation between the amount of dust in one or more regions of the received dust distribution data from the corresponding region in the stored dust distribution data; and if a deviation exceeds a predetermined threshold in one or more region, generating an alert. Optional features associated with all other previously mentioned aspects of the invention may also apply to this most recent aspect of the invention, except where clearly incompatible, or where context clearly dictates otherwise.

The invention includes the combination of the aspects and preferred features described except where such a combination is clearly impermissible or expressly avoided.

### BRIEF DESCRIPTION OF THE DRAWINGS

Embodiments of the present invention will now be described with reference to the accompanying drawings, in which:
- Fig. 1A is a high-level system diagram including a client device, a robotic vacuum cleaner, and a cloud computing server.
- Figs. 1B and 1C show a robotic vacuum cleaner, highlighting the location of a piezoelectric sensor.
- Fig. 2 is a schematic diagram showing the components of a client device.
- Fig. 3 is a schematic diagram showing the components of a robotic vacuum cleaner.
- Fig. 4A is a schematic diagram showing the components of the dust distribution data generation module of the processor of the robotic vacuum cleaner.
- Fig. 4B is a schematic diagram showing the components of the control module of the processor of the robotic vacuum cleaner.
- Fig. 5 is a schematic diagram showing the components of a cloud computing server.
- Fig. 6 is a flowchart illustrating, at a high-level, the steps which are performed by the system of the present invention.
- Figs. 7A, 7B, 8A, and 8B are flowcharts illustrating the generation of the dust distribution data.
- Fig. 8C shows an example of a dust distribution map that may be generated using the dust particle distribution data.
- Figs. 9A and 9B are schematic diagrams illustrating the movement of an robotic vacuum cleaner during a cleaning operation.
- Fig. 10 is a flowchart illustrating the steps involved in transmitting the dust distribution data to the cloud computing server.
- Fig. 11 is a flowchart illustrating the steps which take place when the cloud computing server receives the dust distribution data.
- Fig. 12 is a flowchart illustrating the steps involved in a control operation, based on dust distribution data.
- Fig. 13 is a diagram illustrating a layout of zones in the floor of a building.
- Fig. 14 is a table illustrating a set of operating parameters which may be used by a robotic vacuum cleaner.
- Fig. 15 is a flowchart illustrating the steps involved in an alert generation process, based on dust distribution data.

### DETAILED DESCRIPTION OF THE DRAWINGS

Aspects and embodiments of the present invention will now be discussed with reference to the accompanying figures. Further aspects and embodiments will be apparent to those skilled in the art. All documents mentioned in this text are incorporated herein by reference.

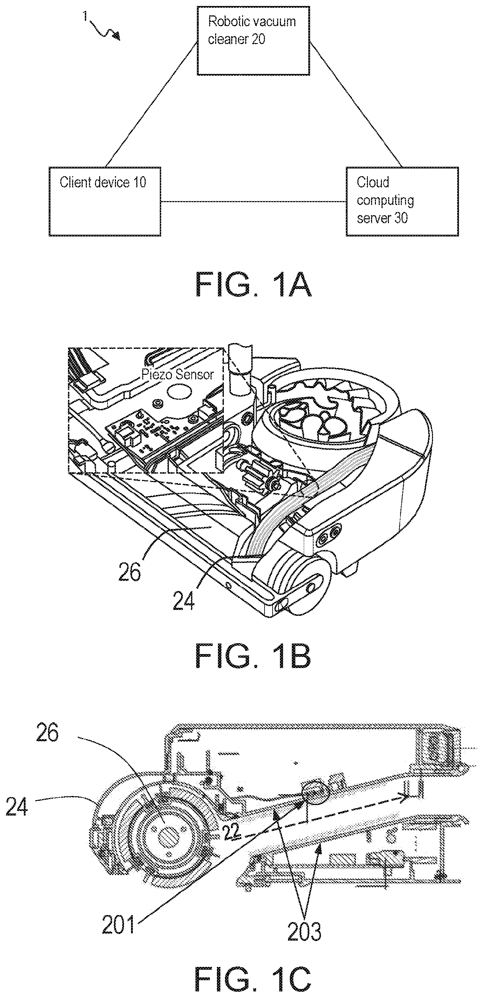

Fig. 1A is a high-level schematic of a system 1 which may be used to execute the method of the first aspect of the invention, for example. The system 1 includes three components: a client device 10, a robotic vacuum cleaner 20, and a cloud computing server 30. These components are interconnected, as indicated by the lines connecting them. Specifically, client device 10, robotic vacuum cleaner 20, and cloud computing server 30 may be connected to each other via one or more networks (not shown), preferably wireless networks, such a Wi-Fi networks or cellular networks. In some cases, the three components may all be connected by the same network, and in other cases, each pair of components may be connected by a separate respective network. In other cases, two pairs of components may be connected by a first network, and the third pair of components may be connected by a second network. Figs. 1A and 1B show an example of a robotic vacuum cleaner 20 which may be used in implementations of the present invention, and will be discussed in more detail shortly.

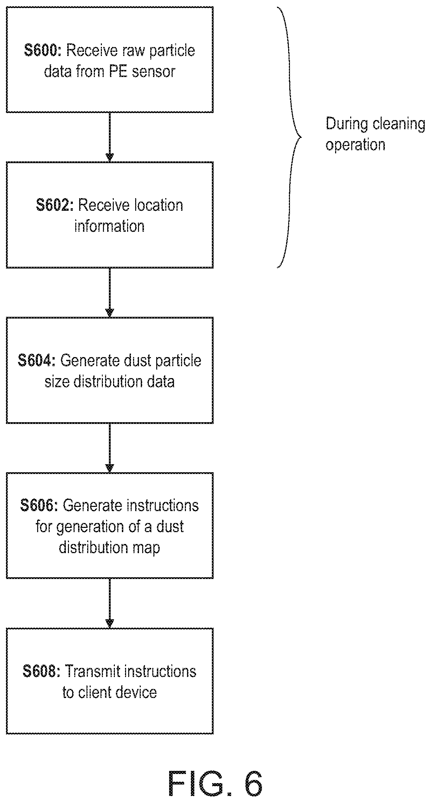

We now describe the components making up, respectively, the client device 10, the robotic vacuum cleaner 20, and the cloud computing server 30 with reference to Figs. 1B to 5, before describing in detail the methods which may be performed by the respective components, with reference to Figs. 6 to 13.

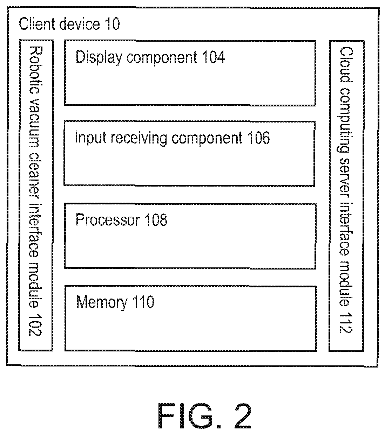

Fig. 2 shows an example of a client device 10 which may be used in methods according to the present invention. The client device 10 is preferably a handheld device such as a smartphone or tablet which has stored thereon an application which is configured to perform various aspects of the present invention. The client device 10 comprises a robotic vacuum cleaner interface module 102 for interfacing the with robotic vacuum cleaner 102. The client device 10 further comprises a display component 104, and input receiving component 106 (such as a touch screen, which may be integrated with the display component 104), a processor 108, and a memory 110. The client device 112 further comprises a cloud computing server interface module 112 for interfacing with the cloud computing server 30. The functions of these components will be described in greater detail later in this application, with reference to the various methods which may be performed in accordance with the invention.

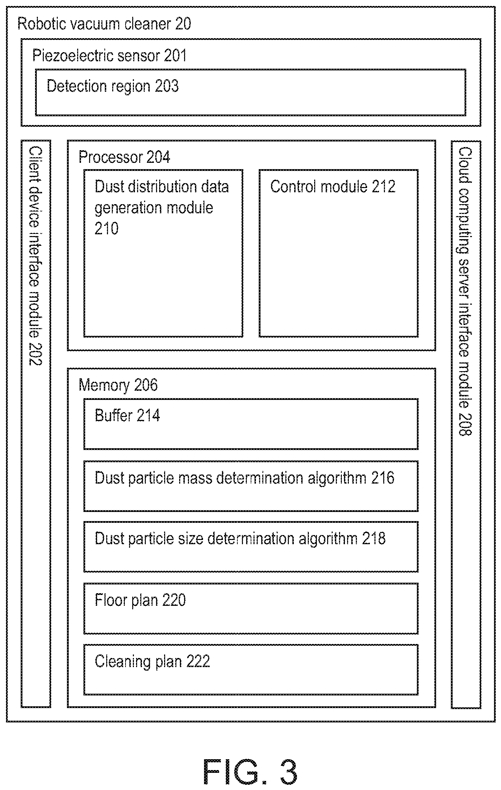

Fig. 3 is a schematic diagram of a robotic vacuum cleaner 20 which may be used in methods according to the present invention. The robotic vacuum cleaner 20 includes a piezoelectric sensor 201 which has a detection region 203. The purpose of the piezoelectric sensor 201 is to generate electrical signals indicative of the size and/or mass of dust particles when they are incident on the detection region 203 thereof. Specifically, the piezoelectric sensor 201 is configured to generate electrical signals based on the vibrations (and resulting changes in pressure) caused by dust particles striking the detection region 203. In some implementations, the piezoelectric sensor 201 may be sufficiently sensitive to generate an electrical signal based on a vibration caused by particles striking a surface anywhere in an airflow path of the robotic vacuum cleaner 20. Figs. 1B and 1C show a non-limiting example of a robotic vacuum cleaner 20 which may be used in implementations of the present invention. In particular, these drawings show the location of an airflow path 22 within the robotic vacuum cleaner 20. The front of the robotic vacuum cleaner 20 includes a brush bar 24 containing a roller 26. The base of the brush bar 24 defines an approximately rectangular area, referred to herein as the brush bar area A. At a given time, while the robotic vacuum cleaner 20 is in a particular location, all of the dust particles which are located in the brush bar area A are entrained in an airflow and pass through the airflow path 22 (which is preferably in the form of an air duct, but it should be acknowledged that other arrangements may be possible). The piezoelectric sensor 201 is located on or in a top surface 28 of the airflow path 22, preferably with the detection region 203 exposed to the airflow path 22. As discussed, in some cases, the piezoelectric sensor 201 (e.g. the RS PRO, SMD Diaphragm External, Piezo Buzzer, up to 30V ac¹) may only generate signals based on vibrations caused by dust particles striking the detection region 203, but in other cases, electrical signals may be generated based on vibrations caused by dust particles striking any internal surfaces 29 of the airflow path 22. In some cases, electrical signals may be generated based on all or substantially all of the dust particles passing through the airflow path 22, but in other cases, the piezoelectric sensor 201 may only generate electrical signals for a sample of the dust particles passing through the airflow path 22. As long as the proportion sampled is constant or substantially constant, the invention is still effective.
¹ https://uk.rs-online.com/web/p/piezo-buzzers/1710886

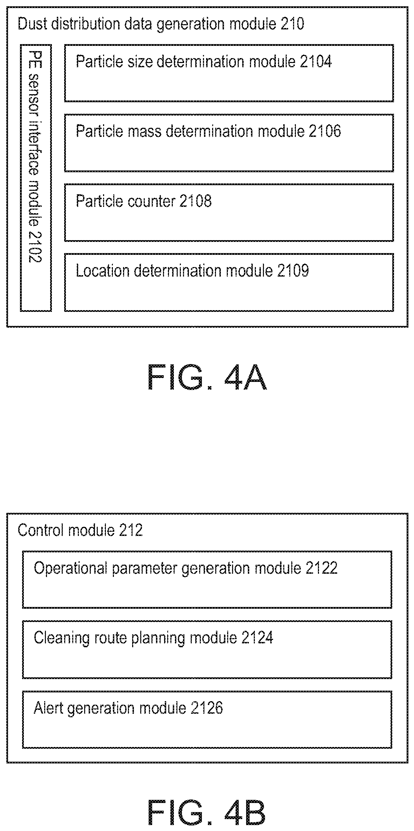

Returning to Fig. 3, the robotic vacuum cleaner 20 further includes a client device interface module 202 for interfacing with the client device 1. The robotic vacuum cleaner 20 further comprises a processor 204 including a dust distribution data generation module 210 whose purpose it is to generate dust distribution data based on input from the piezoelectric sensor 201. The dust distribution data generation module 210 is shown in more detail in Fig. 4A. It includes a piezoelectric sensor interface module 2102 for interfacing with the piezoelectric sensor 201 (i.e. for receiving electrical signals generated by the piezoelectric sensor 201 as outlined above). The dust distribution data generation module 210 further includes a particle size determination module 2014, a particle mass determination module 2106 (though this may not be present in some implementations, in which particle mass is not measured), a particle counter 2108 (though this may not be present in some implementations, in which the number of particles is not counted), and a location determination module 2109. The functionality of these modules is described in detail later in this application.

Returning again to Fig. 3, the processor 204 further comprises a control module 212, whose purpose it is to plan a cleaning operation based on a dust distribution map, or dust distribution data. Fig. 4B shows more details of the control module 212, which includes an operational parameter generation module 2122, a cleaning route planning module 2124, and an alert generation module 2126. The functionality of these modules is described in detail later in this application.

Returning once more to Fig. 3, the robotic vacuum cleaner 20 further includes a memory 206 which includes a buffer 2014, a dust particle mass determination algorithm 216 (though this may not be present in implementations which do not require the calculation of particle mass), a dust particle size determination algorithm 218, a floor plan 220, and a cleaning plan 222. Finally, the robotic vacuum cleaner 20 includes a cloud computing server interface module 208 for interfacing with the cloud computing server 30.

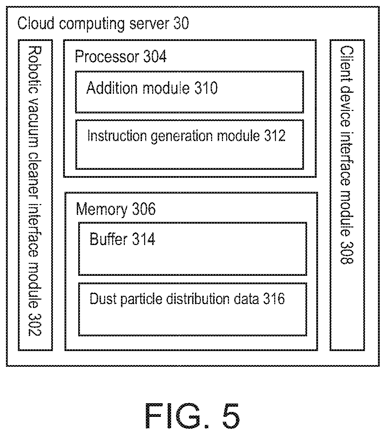

Fig. 5 is a schematic representation of the cloud computing server 30, which by its nature is preferably located remotely from the robotic vacuum cleaner 20 and the client device 10. The cloud computing server 30 comprises a robotic vacuum cleaner interface module 302 for interfacing with the robotic vacuum cleaner 20. The cloud computing server 30 further comprises a processor 304 which includes an addition module 310 and an instruction generation module 312. The cloud computing server 30 further includes a memory 306 which includes a buffer 314 and dust particle distribution data 316. Finally, the cloud computing server 30 includes a client device interface module 308 for interfacing with the client device 10.

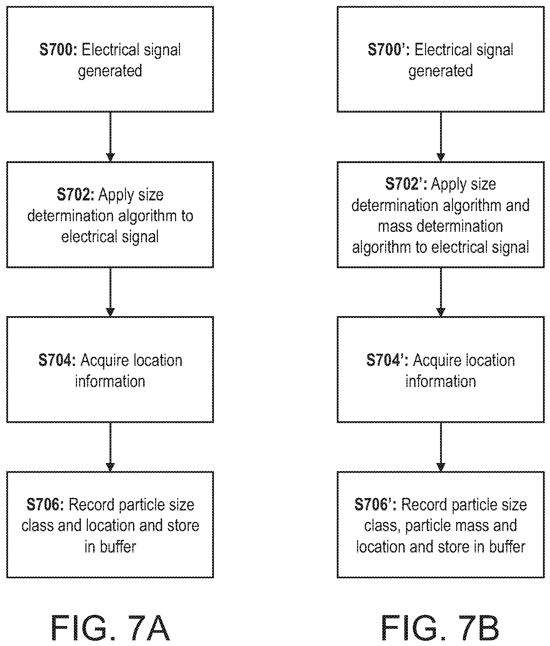

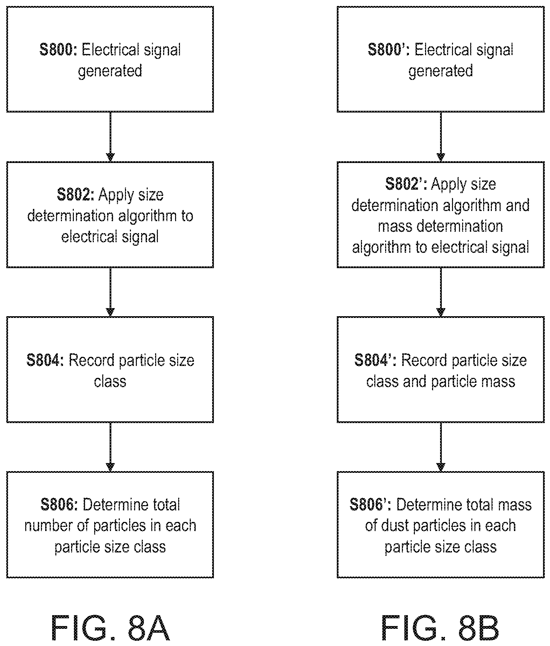

We now describe in detail methods which may be performed according to some aspects of the invention. Fig. 6 is a flowchart illustrating the high-level steps performed by the dust distribution data generation module 210 of the processor 204 of the robotic vacuum cleaner 20. Steps S600 and S602 take place during a cleaning operation of the robotic vacuum cleaner 20, i.e. while the robotic vacuum cleaner 200 is vacuuming the floor of a house or other building according to some cleaning plan 222 which is stored in its memory 208. In step S600, raw particle data is received from the piezoelectric sensor 201 (specifically via the piezoelectric sensor interface module 2102), and in step S602 location information is received from the location determination module 2109 of the dust distribution data generation module 210. In Fig. 6, step S600 is shown to be performed before step S602, but these steps may take place in either order, or may take place simultaneously. Thereafter, in step S604, dust particle size distribution data is generated. In the present context, dust particle size distribution data refers to data indicative of the total number and/or mass of dust particles in each of a plurality of particle size classes within a given region. The methods by which this may be performed are described now, with reference to Figs. 7A, 7B, 8A, and 8B.

Fig. 7A refers to a process in which the location at which every particle is detected is recorded individually. The steps shown in Fig. 7A are performed for each particle detected. In a first step S700, a dust particle causes a vibration which is converted into an electrical signal by the piezoelectric sensor 201. Then, in step S702, the particle size determination module 2104 of the dust distribution data generation module 210 applies the dust particle size determination algorithm 218 to the electrical signal, thereby determining into which particle size class the dust particle in question falls. Then, in step S704, the location at which that dust particle was picked up by the robotic vacuum cleaner 20 is acquired from the location determination module 2109 of the dust distribution data generation module 210. Then finally, in step S706, the particle size class and the respective location of that particle are recorded and stored in the buffer 214 of the memory 208 of the robotic vacuum cleaner 20. As discussed, this process is performed for each dust particle which is detected by the piezoelectric sensor 201. The resulting dust distribution data generated effectively comprises a list of particles (each of which may, for example, be assigned a particle ID), along with the location at which they were detected by the piezoelectric sensor 201, along with their particle size class. Fig. 7B illustrates an almost identical process, except for the fact that in step S702', a particle mass determination algorithm 216 is also applied to the electrical signal by the particle mass determination module 2106, so that the mass of the particle may be determined, as well as the size class of the particle. Then, in step S708', the dust particle mass is also stored alongside the location and the particle size class.

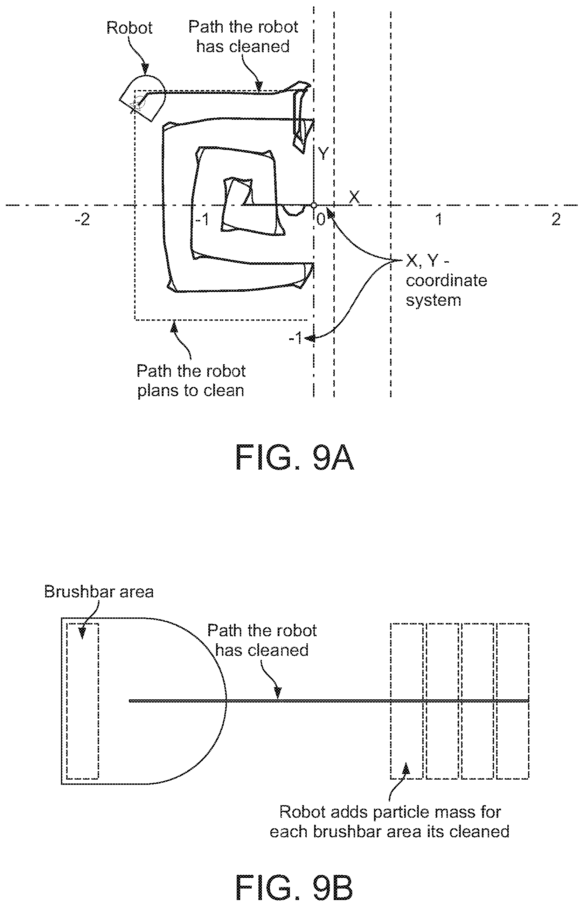

Fig. 8A refers to a process for which a particle count/mass determination are made for each brush bar area A. Figs. 9A and 9B illustrate this in a little more detail. Fig. 9A shows an example of a cleaning path which may be taken by the robotic vacuum cleaner 20, shown by the spiralling line. In the example shown, points on the floor are defined using an (x,y) Cartesian coordinate system, based on some predetermined origin. As the robotic vacuum cleaner 20 progresses along its path, it cleans an area of floor corresponding to a brush bar area A, moving continuously or in increments having the same length as a longitudinal length or the brush bar (i.e. the length measured in the direction of the movement of the robotic vacuum cleaner 20), as shown in Fig. 9B. Returning to Fig. 8A, the process illustrated is performed as the robotic vacuum cleaner 20 is located in each brush bar area A. In a first step (not shown), the location of the brush bar area A is determined and recorded. Then, as a particle is incident on e.g. the detection region 203 of the piezoelectric sensor 201, an electrical signal is generated in step S800. Then, in step S802, the particle size determination module 2016 applies the dust particle size determination algorithm 218 to the electrical signal, thereby determining the particle size class to which the dust particle belongs. In step S804, the particle size class is recorded, e.g. in the buffer 214 of the memory 208. Steps S800 and S804 are performed for each particle detected while the robotic vacuum cleaner 20 is located in the given brush bar area A. In step S806, based on all of the recorded data, the particle counter 2108 determines the number of particles in each particle size class for the given brush bar area. These counts may then be recorded in the buffer 214 of the memory 208 of the robotic vacuum cleaner 20. Then, the robotic vacuum cleaner 20 may move on to the next brush bar area, and the process repeated until the cleaning path has been completed. By only recording the total number of dust particles in each particle class for a given brush bar area, the amount of data which needs to be stored on the buffer 214 of the memory 208 is significantly reduced, although the resulting dust distribution map will have a lower degree of granularity than if the dust distribution data were generated using the method of Fig. 7A.

The process of Fig. 8B is largely identical, except that in step S802', a particle mass determination algorithm 216 is also applied to the electrical signal by the particle mass determination module 2106, so that the mass of the particle may be determined, as well as the size class of the particle. Then, in step S808', the total dust particle mass in each particle size class is determined e.g. by the particle mass determination module 2106, rather than just the number of particles.

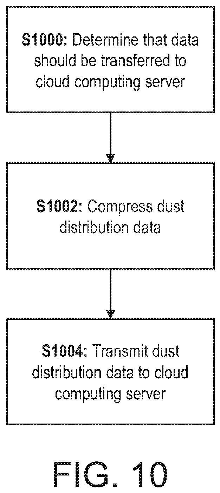

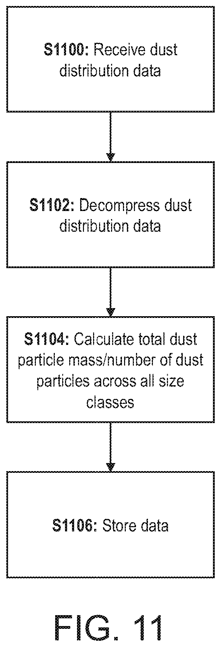

At this point, dust distribution data has been generated and stored in the buffer 214 of the memory 206 of the robotic vacuum cleaner 20. In some cases (not shown), this data may be transmitted to a persistent memory of the robotic vacuum cleaner, but in preferred cases, the dust distribution data 316 is stored in the memory 306 of (or associated with) the cloud computing server 30. Fig. 10 illustrates a process by which the dust distribution data 316 may be stored on the memory 306 of the cloud computing server 30. In a first step S1000, it is determined, e.g. by the processor 204 of the robotic vacuum cleaner 20 that the dust distribution data should be transferred from the buffer 214 of the memory 06 of the robotic vacuum cleaner 20 to the cloud computing server 30. Scenarios in which it may be determined that the dust distribution data is ready for transfer include when the robotic vacuum cleaner 20 has completed a full cleaning operation, when the robotic vacuum cleaner 20 has completed cleaning a predetermined region of the floor of the house or building, at predetermined time intervals, or when a request is received e.g. from the client device 10 for the dust distribution data (e.g. in the form of a dust distribution map). When it is determined in step S1000 that the data should be transferred, in step S1002, the processor 204 (e.g. a specific compression module, not shown in Fig. 2) may then compress the generated dust distribution data stored in the buffer 214 of the memory 206 of the robotic vacuum cleaner 20. By compressing the data, there is less data to be transferred to the cloud computing server 30 via one or more networks (not shown, but discussed in detail earlier). Finally, in step S1004 of Fig. 10, the dust distribution data is transmitted to the cloud computing server 30 via the cloud computing server interface module 208 of the robotic vacuum cleaner 20. We now turn to Fig. 11 which sets out the steps which are performed subsequently by the cloud computing server 30. In step S1100, the dust distribution data is received at the cloud computing server 30 via the robotic vacuum cleaner interface module 302 thereof. Then, in step S1102, the compressed dust distribution data is decompressed by e.g. a decompression module (not shown) of the processor 304 of the cloud computing server 30, and may be temporarily stored, for example in the buffer 316 of the memory 306 of the cloud computing server 30. At this point, it will be recalled that the dust distribution data which has been generated by the dust distribution data generation module 201 of the processor 204 of the robotic vacuum cleaner 20 includes information which is divided into various particle size classes. For example, if the method of Fig. 7A has been adopted, the dust distribution data may comprise a plurality of records, each comprising the particle size class and location of a particle. Similarly, if the method Fig. 8A has been adopted, the dust distribution data may comprise the total number of particles in each particle size class, for each of the brush bar areas. In either case, there is no information which indicates the total particle mass, or total number of particles across all of the particle size classes. Accordingly, in step S1104 of Fig. 11, the addition module 310 of the processor 304 of the cloud computing server 30 calculates, for example for a given brush bar area, or other subdivision of the floor which has been cleaned, the total mass of dust particles, or the total number of particles, by summing together the values in each of the particle size classes. After this calculation is performed by the addition module 310, the resulting dust distribution data 316 is stored in the memory 316 of the cloud computing server 30.

The processes of Figs. 6 to 11 may be performed once, or multiple times during a single cleaning operation. After the cleaning operation is complete, the memory 306 of the cloud computing server 30 (or in cases in which it is retained on the robotic vacuum cleaner, the memory 206) will store comprehensive dust distribution data 316 representing the amount of dust in each of a plurality of particle size classes in each of a plurality of subdivisions of the floor of the building (either in terms of dust particle mass or dust particle number), as well as data representing the total amount of dust in each of those subdivisions of the area. One of the main motivations of the present invention is the generation of a dust distribution map based on the generated dust distribution data, which may then be displayed on the display component 104 of the client device 10.

In order to initiate this process, in response to a user input received at the input receiving component 106 of the client device 10, the client device 10 may transmit a request for a dust distribution map to the cloud computing server 30, via the cloud computing server interface module 112 of the input device 10. This request may be sent to the cloud computing server 30 via an application on the client device 10. The request is then received at the cloud computing server 30 via the client device interface module 308. At that point, step S606 of Fig. 6 takes place: the based on the dust particle distribution data 316 stored on the memory 306, the instruction generation module 312 of the processor 304 of the cloud computing server 30 generates instructions, which when executed by the processor 108 of the client deice 10, are configured to cause the display component 104 of the client device 10 to display a dust particle distribution map. Additional detail about the characteristics of the map are set out elsewhere in this application. In step S608, the generated instructions are transmitted to the client device 10, whereupon they are received via the cloud computing server interface module 112, and may be executed by the processor 108.

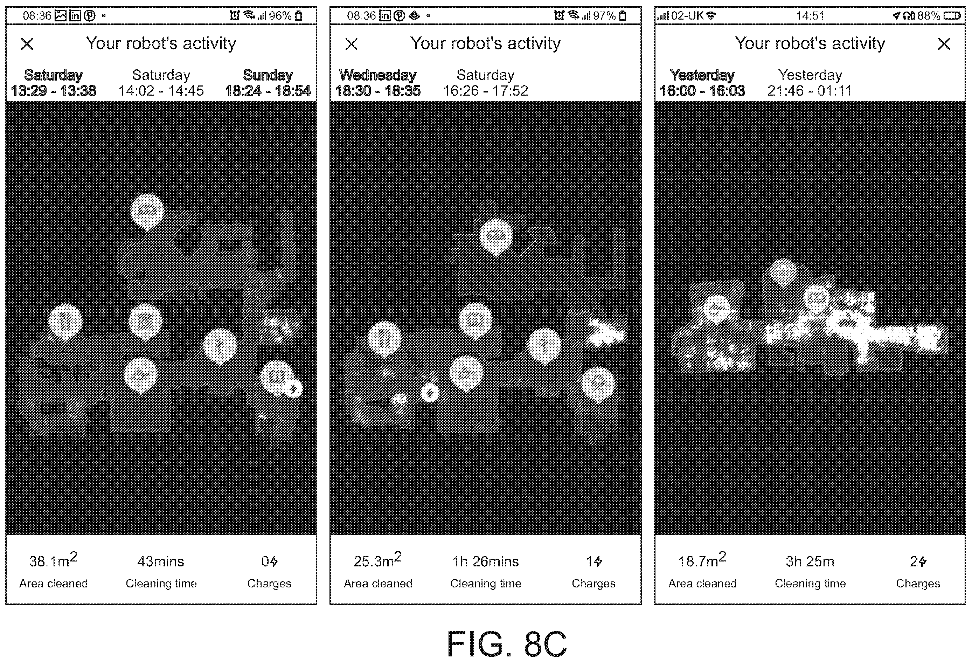

Fig. 8C shows an example of a dust distribution map which may be generated based on the dust distribution data which is generated according to e.g. the first aspect of the invention. In the dust distribution map, the lighter areas are those which include greater amounts of dust.

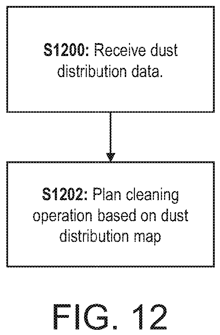

The remaining drawings relate to processes via which the robotic vacuum cleaner 20 may be controlled based on the generated dust distribution data. In order to initiate a cleaning operation, a user of the client device 10 may send a request, via an application stored thereon, to the robotic vacuum cleaner 20. The request may be conveyed via the robotic vacuum cleaner interface module 102 of the client device 10, and the client device interface module 202 of the robotic vacuum cleaner 30. In response, the control module 212 of the processor 204 of the robotic vacuum cleaner 20 may generate a cleaning plan for execution by the robotic vacuum cleaner. As shown in Fig. 12, in order for the control module 212 to generate the cleaning plan, or to plan a cleaning operation, the control module 212 of the processor 204 of the robotic vacuum cleaner 20 may receive the generated dust distribution data, for example from the cloud computing server 30. Specifically, in response to a request for a cleaning operation, the robotic vacuum cleaner 20 may transmit, via the cloud computing server interface module 208, a request the generated dust distribution data 316 from the memory 306 of the cloud computing server 30. The request may be received at the cloud computing server 30 via the robotic vacuum cleaner interface module 302. In response, the cloud computing server 30 may transmit the dust distribution data 316 from its memory to the robotic vacuum cleaner 20, via the robotic vacuum cleaner interface module 302. The control module 212 of the processor 204 of the robotic vacuum cleaner 20 may then receive the dust distribution data 316 via the cloud computing server interface module 208. This is shown as step S1200 of Fig. 12. Then, in step S1202, the control module 212 plans a cleaning operation based on the received dust distribution data 316. The planned cleaning operation 222 may subsequently be stored in the memory 206 of the robotic vacuum cleaner 20. More specifically, the cleaning route planning module 2124 of the control module 212 may determine a cleaning route, e.g. by determining an order in which various locations should be visited by the robotic vacuum cleaner 20 during the cleaning operation. Then, the operational parameter generation module 2122 may, for each location, determine an appropriate operational parameter or parameters to use. These two components may accordingly work together to form the cleaning plan.

In alternative implementations, these steps may take place at different locations. For example, the planning operation may take place on a control module (not shown) of the cloud computing server 30, and subsequently transmitted to the robotic vacuum cleaner 20 for storage in the memory 206. This approach has an advantage of outsourcing the potentially computationally demanding planning to the cloud computing server, thereby reducing the processing requirements of the processor 204 of the robotic vacuum cleaner 20.

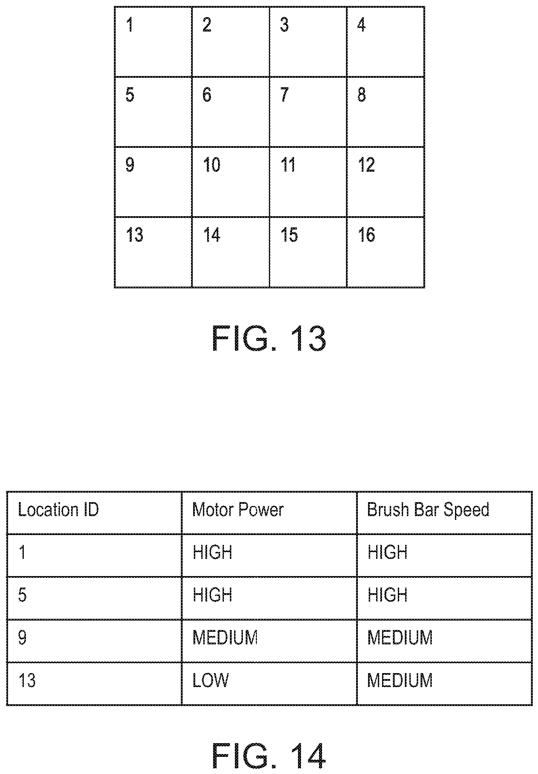

As we have discussed elsewhere in this application, there are a number of operational parameters which may be varied during a clean, including suction power and the speed of rotation of a brush bar. In addition, the cleaning plan 222 may also specify an order of various locations to visit during the clean. Fig. 13 shows a schematic representation of a room containing predefined zones 1 to 16. Of course, in reality, the cleaning zones are likely to be more complicated than this, but this is for illustrative purposes only. Fig. 14 shows an example of a cleaning plan which specifies that the robotic vacuum cleaner 20 should move along the left-hand side of the room first, through zones with location IDs 1, 5, 9, and 13. For each zone, the plan specifies a motor power and brush bar speed. It will be appreciated that other operating parameters may also be defined in the plan. It should be stressed that the plan shown in Fig. 14 is a schematic representation, and the data may be stored in various forms. In Fig. 14 the data is shown in the form of a table for ease of understanding. It should be noted that the cleaning plan may include other parameters too, and the example shown in Fig. 14 should not be taken as limiting.

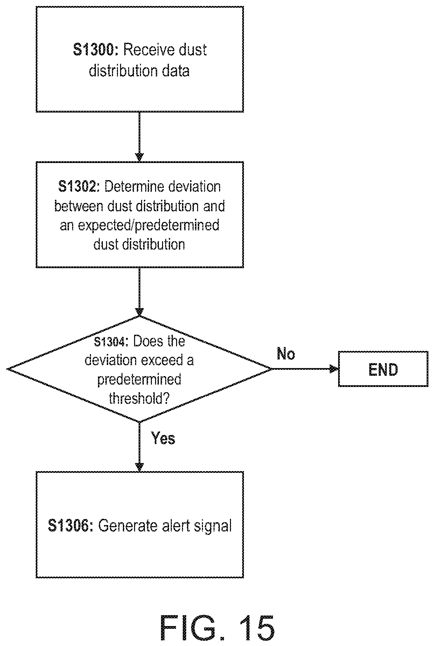

Fig. 15 shows an example of an alert generation process, in which trends in the dust distribution data may be monitored and an alert may be generated in the event that an unexpected deviation is detected. Specifically, in a first step S1300, alert generation module 2126 of the control module 212 of the processor 204 of the robotic vacuum cleaner 20 may receive the most recently generated dust distribution data. Alternatively, this step may be performed on processor 108 of the client device 10 or processor 304 of the cloud computing server 30. Then, in step S1302, a deviation between the received dust distribution data and an expected dust distribution may be determined, by the same component as performed step S1300, or by another component. In step S1304, it is determined whether the deviation exceeds a predetermined deviation threshold, and if so, in step S1306, an alert is generated. If not, the process ends.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the scope of the appended claims.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1. A system for generating dust particle size distribution data indicating the distribution of dust particles on the floor of a building, the system comprising:
a robotic vacuum cleaner (20) comprising:
an airflow path (22) having a piezoelectric sensor (201) located therein, the piezoelectric sensor configured to generate a plurality of electrical signals in response to a respective plurality of vibrations, each vibration caused by a dust particle striking a detection region (203) of the airflow path; and
a location determination module (2109) configured to determine location information of the robotic vacuum cleaner within the building;
and
a data processing system (204) comprising a dust particle size determination module (2104),
wherein:
the data processing system is configured, based on the plurality of electrical signals, to generate dust particle size distribution data (316) indicative of a size distribution of dust particles across the floor of the building;
for each particle that strikes the detection region, the dust particle size detection module is configured to determine size information of that dust particle; and
for each particle that strikes the detection region, the size information identifies the particle size, or a particle size class to which the dust particle belongs.

2. The system of claim 1, wherein:
the size distribution of dust particles indicates either a number of particles or total mass of particles in each of a plurality of predetermined size classes.

3. The system of claim 2, wherein:
the predetermined size classes comprise:
ultrafine dust particles having a dust particle size of 10 to 90µm;
fine dust particles having a dust particle size of 90 to 180µm;
medium dust particles having a dust particle size of 180 to 500µm; and
coarse dust particles having a dust particle size of 500 to 2000µm .

4. The system of any of claims 1-3, wherein:
for each particle that strikes the detection region, the dust particle size determination module (2104) is configured to apply a dust particle size determination algorithm (218) to the electrical signal generated by the piezoelectric sensor in respect of that dust particle.

5. The system of any of claims 1-4, wherein:
during a cleaning operation, when the robotic vacuum cleaner (20) is removing dust from a first cleaning region, the location determination module (2109) is configured to determine a first location of the robotic vacuum cleaner, and the particle size determination module (2104) is configured to determine respective size information for each dust particle which strikes the detection region of the piezoelectric sensor (201);
either (a) after all of the dust has been removed from the first cleaning region, or (b) after a predetermined amount of time, a particle counter of the data processing system (204) may be configured to determine a total number of dust particles which have struck the detection region (203) in each of the particle size classes based on the determine size information, while the robotic vacuum cleaner has been located in the first location; and
the dust particle size distribution data (316) generated for the first cleaning region comprises a total number of dust particles in each of the particle size classes.

6. The system of claim 5, wherein:
during a cleaning operation, the robotic vacuum cleaner (20) is configured to move to a second cleaning region and to remove dust from the second cleaning region, and when the robotic vacuum cleaner is removing dust from the second cleaning region, the location determination module (2109) is configured to determine a second location of the robotic vacuum cleaner, and the particle size determination module (2104) is configured to determine respective size information for each dust particle which strikes the detection region (203) of the piezoelectric sensor (201);
either (a) after all of the dust has been removed from the second cleaning region, or (b) after a predetermined amount of time, a particle counter of the data processing system (204) may be configured to determine a total number of dust particles which have struck the detection region in each of the particle size classes based on the determine size information, while the robotic vacuum cleaner has been located in the second location; and
the dust particle size distribution data (316) generated for the second cleaning region comprises a total number of dust particles in each of the particle size.

7. The system of any one of claims 1 to 6, wherein:
during a cleaning operation, when the robotic vacuum cleaner (20) is removing dust from a first cleaning region, the location determination module (2109) is configured to determine a first location of the robotic vacuum cleaner, the particle size determination module (2104) is configured to determine respective size information for each dust particle which strikes the detection region (203) of the piezoelectric sensor (201), and a particle mass determination module (2106) is configured to determine the mass of each particle which strikes the detection region of the piezoelectric sensor;
either (a) after all of the dust has been removed from the first cleaning region, or (b) after a predetermined amount of time, the data processing system (204) may be configured to determine a total mass of dust particles which have struck the detection region in each of the particle size classes based on the masses determined by the particle mass determination module, while the robotic vacuum cleaner has been located in the first location; and
the dust particle size distribution data (316) generated for the first cleaning region comprises a total mass of dust particles in each of the particle size classes.

8. The system of claim 7, wherein:
during a cleaning operation, the robotic vacuum cleaner (20) is configured to move to a second cleaning region and to remove dust from the second cleaning region, and when the robotic vacuum cleaner is removing dust from the second cleaning region, the location determination module (2109) is configured to determine a second location of the robotic vacuum cleaner, the particle size determination module (2104) is configured to determine respective size information for each dust particle which strikes the detection region (203) of the piezoelectric sensor (201), and the particle mass determination module (2106) is configured to determine the mass of each particle which strikes the detection region of the piezoelectric sensor;
either (a) after all of the dust has been removed from the second cleaning region, or (b) after a predetermined amount of time, the data processing system (204) is configured to determine a total mass of dust particles which have struck the detection region in each of the particle size classes based on the masses determined by the particle mass determination module, while the robotic vacuum cleaner has been located in the second location; and
the dust particle size distribution data (316) generated for the second cleaning region comprises a total mass of dust particles in each of the particle size.

9. The system of any one of claims 1 to 8, wherein:
the data processing system (204) further comprises an addition module (310) which is configured to calculate the respective total mass of dust particles and/or the respective total number of dust particles across all of the particle size classes within each cleaning region.

10. The system of any one of claims 1 to 9, wherein:
the data processing system (204) is a distributed data processing system comprising a first data processor (204) located on the robotic vacuum cleaner (20) and a second data processor (304) located on a cloud computing server (30) external to the robotic vacuum cleaner;
the first data processor comprises the particle size determination module (2104) and the particle mass determination module (2106); and
the second data processor comprises the addition module (310).

11. The system of any one of claims 1 to 10, wherein:
the floor of the building comprises a plurality of zones, and during a cleaning operation, the robotic vacuum cleaner (20) is configured to traverse the plurality of zones in sequence; and
the first data processor (204) is configured to transmit the dust particle size distribution data (316) from each zone after it has traversed that zone.

12. The system of any one of claims 1 to 11, wherein:
the data processing system (204) is configured to generate, based on the dust particle size distribution data (316), instructions which, when executed by a processor of a client device (10), cause a display component of the client device to display a dust distribution map visually representative of the dust particle size distribution data.

13. The system of claim 12, wherein:
the data processing system (204) is configured to receive a request for a dust distribution map, and to generate the instructions in response to receiving the request for a dust distribution map.

14. A method of generating dust particle size distribution data (316) indicating the distribution of dust particles on the floor of a building, the method comprising:
during a cleaning operation of a robotic vacuum cleaner (20), generating, by a piezoelectric sensor (201), a plurality of electric signals in response to a respective plurality of vibrations, each vibration caused by a dust particle striking a detection region of an airflow path of the robotic vacuum cleaner;
determining location information indicating a location of the robotic vacuum cleaner within the building;
for each particle that strikes a detection region (203) of the piezoelectric sensor, determining size information of that dust particle, where the size information identifies a particle size, or a particle size class to which the dust particle belongs; and
generating, based on the plurality of electrical signals and the determined location information, dust particle size distribution data indicative of a size distribution of dust particles across the floor of the building.

## Patentansprüche

1. System zum Erzeugen von Staubpartikelgrößenverteilungsdaten, die die Verteilung von Staubpartikeln auf dem Boden eines Gebäudes angeben, wobei das System Folgendes umfasst:
einen Staubsaugroboter (20), der Folgendes umfasst:
einen Luftströmungsweg (22) mit einem darin befindlichen piezoelektrischen Sensor (201), wobei der piezoelektrische Sensor dazu ausgelegt ist, als Reaktion auf eine jeweilige Mehrzahl von Vibrationen eine Mehrzahl von elektrischen Signalen zu erzeugen, wobei jede Vibration dadurch verursacht wird, dass ein Staubpartikel auf einen Detektionsbereich (203) des Luftströmungswegs auftrifft; und
ein Standortbestimmungsmodul (2109), das dazu ausgelegt ist, Standortinformationen des Staubsaugroboters innerhalb des Gebäudes zu bestimmen;
und
ein Datenverarbeitungssystem (204), das ein Staubpartikelgrößenbestimmungsmodul (2104) umfasst,
wobei:
das Datenverarbeitungssystem dazu ausgelegt ist, basierend auf der Mehrzahl von elektrischen Signalen Staubpartikelgrößenverteilungsdaten (316) zu erzeugen, die eine Größenverteilung von Staubpartikeln über den Boden des Gebäudes hinweg angeben;
für jedes Partikel, das auf den Detektionsbereich auftrifft, das Staubpartikelgrößendetektionsmodul dazu ausgelegt ist, Größeninformationen dieses Staubpartikels zu bestimmen; und
für jedes Partikel, das auf den Detektionsbereich auftrifft, die Größeninformationen die Partikelgröße oder eine Partikelgrößenklasse identifizieren, zu der das Staubpartikel gehört.

2. System nach Anspruch 1, wobei:
die Größenverteilung von Staubpartikeln entweder eine Anzahl von Partikeln oder eine Gesamtmasse von Partikeln in jeder einer Mehrzahl von vorbestimmten Größenklassen angibt.

3. System nach Anspruch 2, wobei:
die vorbestimmten Größenklassen Folgendes umfassen:
ultrafeine Staubpartikel mit einer Staubpartikelgröße von 10 bis 90 µm;
Feinstaubpartikel mit einer Staubpartikelgröße von 90 bis 180 µm;
mittlere Staubpartikel mit einer Staubpartikelgröße von 180 bis 500 µm; und
grobe Staubpartikel mit einer Staubpartikelgröße von 500 bis 2000 µm.

4. System nach einem der Ansprüche 1-3, wobei:
für jedes Partikel, das auf den Detektionsbereich auftrifft, das Staubpartikelgrößenbestimmungsmodul (2104) dazu ausgelegt ist, einen Staubpartikelgrößenbestimmungsalgorithmus (218) auf das elektrische Signal anzuwenden, das in Bezug auf dieses Staubpartikel von dem piezoelektrischen Sensor erzeugt wurde.

5. System nach einem der Ansprüche 1-4, wobei:
während eines Reinigungsvorgangs, wenn der Staubsaugroboter (20) Staub aus einem ersten Reinigungsbereich entfernt, das Standortbestimmungsmodul (2109) dazu ausgelegt ist, einen ersten Standort des Staubsaugroboters zu bestimmen, und das Partikelgrößenbestimmungsmodul (2104) dazu ausgelegt ist, jeweilige Größeninformationen für jedes Staubpartikel zu bestimmen, das auf den Detektionsbereich des piezoelektrischen Sensors (201) auftrifft;
entweder (a) nachdem der gesamte Staub aus dem ersten Reinigungsbereich entfernt wurde, oder (b) nach einer vorbestimmten Zeitdauer, ein Partikelzähler des Datenverarbeitungssystems (204) dazu ausgelegt sein kann, eine Gesamtanzahl von auf den Detektionsbereich (203) aufgetroffenen Staubpartikeln in jeder der Partikelgrößenklassen basierend auf den bestimmten Größeninformationen zu bestimmen, während sich der Staubsaugroboter an dem ersten Standort befand; und
die für den erste Reinigungsbereich erzeugten Staubpartikelgrößenverteilungsdaten (316) eine Gesamtanzahl von Staubpartikeln in jeder der Partikelgrößenklassen umfassen.

6. System nach Anspruch 5, wobei:
während eines Reinigungsvorgangs, der Staubsaugroboter (20) dazu ausgelegt ist, sich zu einem zweiten Reinigungsbereich zu bewegen und Staub aus dem zweiten Reinigungsbereich zu entfernen, und wenn der Staubsaugroboter Staub aus dem zweiten Reinigungsbereich entfernt, das Standortbestimmungsmodul (2109) dazu ausgelegt ist, einen zweiten Standort des Staubsaugroboters zu bestimmen, und das Partikelgrößenbestimmungsmodul (2104) dazu ausgelegt ist, jeweilige Größeninformationen für jedes Staubpartikel zu bestimmen, das auf den Detektionsbereich (203) des piezoelektrischen Sensors (201) auftrifft;
entweder (a) nachdem der gesamte Staub aus dem zweiten Reinigungsbereich entfernt wurde, oder (b) nach einer vorbestimmten Zeitdauer, ein Partikelzähler des Datenverarbeitungssystems (204) dazu ausgelegt sein kann, eine Gesamtanzahl von Staubpartikeln, die auf den Detektionsbereich aufgetroffen sind, in jeder der Partikelgrößenklassen basierend auf den bestimmten Größeninformationen zu bestimmen, während sich der Staubsaugroboter an dem zweiten Standort befand; und
die Staubpartikelgrößenverteilungsdaten (316), die für den zweite Reinigungsbereich erzeugt werden, eine Gesamtanzahl von Staubpartikeln in jeder der Partikelgröße umfassen.

7. System nach einem der Ansprüche 1 bis 6, wobei:
während eines Reinigungsvorgangs, wenn der Staubsaugroboter (20) Staub aus einem ersten Reinigungsbereich entfernt, das Standortbestimmungsmodul (2109) dazu ausgelegt ist, einen ersten Standort des Staubsaugroboters zu bestimmen, das Partikelgrößenbestimmungsmodul (2104) dazu ausgelegt ist, jeweilige Größeninformationen für jedes Staubpartikel zu bestimmen, das auf den Detektionsbereich (203) des piezoelektrischen Sensors (201) auftrifft, und ein Partikelmassenbestimmungsmodul (2106) dazu ausgelegt ist, die Masse jedes Partikels zu bestimmen, das auf den Detektionsbereich des piezoelektrischen Sensors auftrifft;
entweder (a) nachdem der gesamte Staub aus dem ersten Reinigungsbereich entfernt wurde, oder (b) nach einer vorbestimmten Zeitdauer, das Datenverarbeitungssystem (204) dazu ausgelegt sein kann, eine Gesamtmasse von Staubpartikeln, die auf den Detektionsbereich aufgetroffen sind, in jeder der Partikelgrößenklassen basierend auf den von dem Partikelmassenbestimmungsmodul bestimmten Massen zu bestimmen, während sich der Staubsaugroboter an dem ersten Standort befand; und
die für den ersten Reinigungsbereich erzeugten Staubpartikelgrößenverteilungsdaten (316) eine Gesamtmasse von Staubpartikeln in jeder der Partikelgrößenklassen umfassen.

8. System nach Anspruch 7, wobei:
während eines Reinigungsvorgangs, der Staubsaugroboter (20) dazu ausgelegt ist, sich zu einem zweiten Reinigungsbereich zu bewegen und Staub aus dem zweiten Reinigungsbereich zu entfernen, und wenn der Staubsaugroboter Staub aus dem zweiten Reinigungsbereich entfernt, das Standortbestimmungsmodul (2109) dazu ausgelegt ist, einen zweiten Standort des Staubsaugroboters zu bestimmen, das Partikelgrößenbestimmungsmodul (2104) dazu ausgelegt ist, jeweilige Größeninformationen für jedes Staubpartikel zu bestimmen, das auf den Detektionsbereich (203) des piezoelektrischen Sensors (201) auftrifft, und das Partikelmassenbestimmungsmodul (2106) dazu ausgelegt ist, die Masse jedes Partikels zu bestimmen, das auf den Detektionsbereich des piezoelektrischen Sensors auftrifft;
entweder (a) nachdem der gesamte Staub aus dem zweiten Reinigungsbereich entfernt wurde, oder (b) nach einer vorbestimmten Zeitdauer, das Datenverarbeitungssystem (204) dazu ausgelegt ist, eine Gesamtmasse von Staubpartikeln, die auf den Detektionsbereich aufgetroffen sind, in jeder der Partikelgrößenklassen basierend auf den von dem Partikelmassenbestimmungsmodul bestimmten Massen zu bestimmen, während sich der Staubsaugroboter an dem zweiten Standort befand; und
die für den zweite Reinigungsbereich erzeugten Staubpartikelgrößenverteilungsdaten (316) eine Gesamtmasse von Staubpartikeln in jeder der Partikelgröße umfassen.

9. System nach einem der Ansprüche 1 bis 8, wobei:
das Datenverarbeitungssystem (204) ferner ein Additionsmodul (310) umfasst, das dazu ausgelegt ist, die jeweilige Gesamtmasse von Staubpartikeln und/oder die jeweilige Gesamtanzahl von Staubpartikeln über alle Partikelgrößenklassen hinweg innerhalb jedes Reinigungsbereichs zu berechnen.

10. System nach einem der Ansprüche 1 bis 9, wobei:
das Datenverarbeitungssystem (204) ein verteiltes Datenverarbeitungssystem ist, das einen auf dem Staubsaugroboter (20) befindlichen ersten Datenprozessor (204) und einen auf einem Cloud-Computing-Server (30) außerhalb des Staubsaugroboters befindlichen zweiten Datenprozessor (304) umfasst;
der erste Datenprozessor das Partikelgrößenbestimmungsmodul (2104) und das Partikelmassenbestimmungsmodul (2106) umfasst; und
der zweite Datenprozessor das Additionsmodul (310) umfasst.

11. System nach einem der Ansprüche 1 bis 10, wobei:
der Boden des Gebäudes eine Mehrzahl von Zonen umfasst, und während eines Reinigungsvorgangs der Staubsaugroboter (20) dazu ausgelegt ist, die Mehrzahl von Zonen nacheinander zu durchlaufen; und
der erste Datenprozessor (204) dazu ausgelegt ist, die Staubpartikelgrößenverteilungsdaten (316) von jeder Zone zu übertragen, nachdem er diese Zone durchlaufen hat.

12. System nach einem der Ansprüche 1 bis 11, wobei:
das Datenverarbeitungssystem (204) dazu ausgelegt ist, basierend auf den Staubpartikelgrößenverteilungsdaten (316) Anweisungen zu erzeugen, die, wenn sie von einem Prozessor einer Client-Vorrichtung (10) ausgeführt werden, bewirken, dass eine Anzeigekomponente der Client-Vorrichtung eine Staubverteilungskarte anzeigt, die die Staubpartikelgrößenverteilungsdaten visuell darstellt.

13. System nach Anspruch 12, wobei:
das Datenverarbeitungssystem (204) dazu ausgelegt ist, eine Anforderung für eine Staubverteilungskarte zu empfangen und die Anweisungen als Reaktion auf das Empfangen der Anforderung für eine Staubverteilungskarte zu erzeugen.

14. Verfahren zum Erzeugen von Staubpartikelgrößenverteilungsdaten (316), die die Verteilung von Staubpartikeln auf dem Boden eines Gebäudes angeben, wobei das Verfahren Folgendes umfasst:
während eines Reinigungsvorgangs eines Staubsaugroboters (20), Erzeugen, durch einen piezoelektrischen Sensor (201), einer Mehrzahl von elektrischen Signalen als Reaktion auf eine jeweilige Mehrzahl von Vibrationen, wobei jede Vibration dadurch verursacht wird, dass ein Staubpartikel auf einen Detektionsbereich eines Luftströmungswegs des Staubsaugroboters auftrifft;
Bestimmen von Standortinformationen, die einen Standort des Staubsaugroboters innerhalb des Gebäudes angeben;
für jedes Partikel, das auf einen Detektionsbereich (203) des piezoelektrischen Sensors auftrifft, Bestimmen von Größeninformationen dieses Staubpartikels, wobei die Größeninformationen eine Partikelgröße oder eine Partikelgrößenklasse identifizieren, zu der das Staubpartikel gehört; und
Erzeugen, basierend auf der Mehrzahl von elektrischen Signalen und den bestimmten Standortinformationen, von Staubpartikelgrößenverteilungsdaten, die eine Größenverteilung von Staubpartikeln über den Boden des Gebäudes hinweg angeben.

## Revendications

1. Système de génération de données de distribution de tailles de particules de poussière indiquant la distribution de particules de poussière sur le sol d'un bâtiment, le système comprenant :
un aspirateur robotisé (20) comprenant :
un trajet d'écoulement d'air (22) à l'intérieur duquel est situé un capteur piézoélectrique (201), le capteur piézoélectrique étant configuré pour générer une pluralité de signaux électriques en réponse à une pluralité respective de vibrations, chaque vibration étant provoquée par une particule de poussière frappant une région de détection (203) du trajet d'écoulement d'air ; et
un module de détermination de localisation (2109) configuré pour déterminer des informations de localisation de l'aspirateur robotisé à l'intérieur du bâtiment ;
et
un système de traitement de données (204) comprenant un module de détermination de tailles de particules de poussière (2104),
dans lequel :
le système de traitement de données est configuré, sur la base de la pluralité de signaux électriques, pour générer des données de distribution de tailles de particules de poussière (316) indiquant une distribution de tailles de particules de poussière sur l'ensemble du sol du bâtiment ;
pour chaque particule qui frappe la région de détection, le module de détection de tailles de particules de poussière est configuré pour déterminer des informations de taille de cette particule de poussière ; et
pour chaque particule qui frappe la région de détection, les informations de taille identifient la taille de particule, ou une classe de taille de particules à laquelle la particule de poussière appartient.

2. Système selon la revendication 1, dans lequel :
la distribution de tailles de particules de poussière indique soit un nombre de particules, soit une masse totale de particules dans chacune d'une pluralité de classes de taille prédéterminées.

3. Système selon la revendication 2, dans lequel :
les classes de taille prédéterminées comprennent :
des particules de poussière ultrafines présentant une taille de particules de poussière de 10 à 90 µm ;
des particules de poussière fines présentant une taille de particules de poussière de 90 à 180 µm ;
des particules de poussière moyennes présentant une taille de particules de poussière de 180 à 500 µm ; et
des particules de poussière grossières présentant une taille de particules de poussière de 500 à 2000 µm.

4. Système selon l'une quelconque des revendications 1 à 3, dans lequel :
pour chaque particule qui frappe la région de détection, le module de détermination de tailles de particules de poussière (2104) est configuré pour appliquer un algorithme de détermination de tailles de particules de poussière (218) au signal électrique généré par le capteur piézoélectrique concernant cette particule de poussière.

5. Système selon l'une quelconque des revendications 1 à 4, dans lequel :
au cours d'une opération de nettoyage, lorsque l'aspirateur robotisé (20) enlève de la poussière d'une première région de nettoyage, le module de détermination de localisation (2109) est configuré pour déterminer une première localisation de l'aspirateur robotisé, et le module de détermination de tailles de particules (2104) est configuré pour déterminer des informations de taille respectives pour chaque particule de poussière qui frappe la région de détection du capteur piézoélectrique (201) ;
soit (a) après enlèvement de l'intégralité de la poussière de la première région de nettoyage, soit (b) après un laps de temps prédéterminé, un compteur de particules du système de traitement de données (204) peut être configuré pour déterminer un nombre total de particules de poussière ayant frappé la région de détection (203) dans chacune des classes de taille de particules sur la base des informations de taille déterminées, pendant que l'aspirateur robotisé se trouvait à la première localisation ; et
les données de distribution de tailles de particules de poussière (316) générées pour la première région de nettoyage comprennent un nombre total de particules de poussière dans chacune des classes de taille de particules.

6. Système selon la revendication 5, dans lequel :
au cours d'une opération de nettoyage, l'aspirateur robotisé (20) est configuré pour se déplacer vers une deuxième région de nettoyage et pour enlever la poussière de la deuxième région de nettoyage et, lorsque l'aspirateur robotisé enlève la poussière de la deuxième région de nettoyage, le module de détermination de localisation (2109) est configuré pour déterminer une deuxième localisation de l'aspirateur robotisé, et le module de détermination de tailles de particules (2104) est configuré pour déterminer des informations de taille respectives pour chaque particule de poussière qui frappe la région de détection (203) du capteur piézoélectrique (201) ;
soit (a) après enlèvement de l'intégralité de la poussière de la deuxième région de nettoyage, soit (b) après un laps de temps prédéterminé, un compteur de particules du système de traitement de données (204) peut être configuré pour déterminer un nombre total de particules de poussière ayant frappé la région de détection dans chacune des classes de taille de particules sur la base des informations de taille déterminées, pendant que l'aspirateur robotisé se trouvait à la deuxième localisation ; et
les données de distribution de tailles de particules de poussière (316) générées pour la deuxième région de nettoyage comprennent un nombre total de particules de poussière dans chacune de la taille de particules.

7. Système selon l'une quelconque des revendications 1 à 6, dans lequel :
au cours d'une opération de nettoyage, lorsque l'aspirateur robotisé (20) enlève de la poussière d'une première région de nettoyage, le module de détermination de localisation (2109) est configuré pour déterminer une première localisation de l'aspirateur robotisé, le module de détermination de tailles de particules (2104) est configuré pour déterminer des informations de taille respectives pour chaque particule de poussière qui frappe la région de détection (203) du capteur piézoélectrique (201), et un module de détermination de masses de particules (2106) est configuré pour déterminer la masse de chaque particule qui frappe la région de détection du capteur piézoélectrique ;
soit (a) après enlèvement de l'intégralité de la poussière de la première région de nettoyage, soit (b) après un laps de temps prédéterminé, le système de traitement de données (204) peut être configuré pour déterminer une masse totale de particules de poussière ayant frappé la région de détection dans chacune des classes de taille de particules sur la base des masses déterminées par le module de détermination de masses de particules, pendant que l'aspirateur robotisé se trouvait à la première localisation ; et
les données de distribution de tailles de particules de poussière (316) générées pour la première région de nettoyage comprennent une masse totale de particules de poussière dans chacune des classes de taille de particules.

8. Système selon la revendication 7, dans lequel :
au cours d'une opération de nettoyage, l'aspirateur robotisé (20) est configuré pour se déplacer vers une deuxième région de nettoyage et pour enlever la poussière de la deuxième région de nettoyage et, lorsque l'aspirateur robotisé enlève la poussière de la deuxième région de nettoyage, le module de détermination de localisation (2109) est configuré pour déterminer une deuxième localisation de l'aspirateur robotisé, le module de détermination de tailles de particules (2104) est configuré pour déterminer des informations de taille respectives pour chaque particule de poussière qui frappe la région de détection (203) du capteur piézoélectrique (201), et le module de détermination de masses de particules (2106) est configuré pour déterminer la masse de chaque particule qui frappe la région de détection du capteur piézoélectrique ;
soit (a) après enlèvement de l'intégralité de la poussière de la deuxième région de nettoyage, soit (b) après un laps de temps prédéterminé, le système de traitement de données (204) est configuré pour déterminer une masse totale de particules de poussière ayant frappé la région de détection dans chacune des classes de taille de particules sur la base des masses déterminées par le module de détermination de masses de particules, pendant que l'aspirateur robotisé se trouvait à la deuxième localisation ; et
les données de distribution de tailles de particules de poussière (316) générées pour la deuxième région de nettoyage comprennent une masse totale de particules de poussière dans chacune de la taille de particules.

9. Système selon l'une quelconque des revendications 1 à 8, dans lequel :
le système de traitement de données (204) comprend en outre un module d'addition (310) configuré pour calculer la masse totale respective de particules de poussière et/ou le nombre total respectif de particules de poussière sur l'ensemble des classes de taille de particules à l'intérieur de chaque région de nettoyage.

10. Système selon l'une quelconque des revendications 1 à 9, dans lequel :
le système de traitement de données (204) est un système de traitement de données réparti comprenant un premier processeur de données (204) situé sur l'aspirateur robotisé (20) et un deuxième processeur de données (304) situé sur un serveur d'informatique en nuage (30) externe à l'aspirateur robotisé ;
le premier processeur de données comprend le module de détermination de tailles de particules (2104) et le module de détermination de masses de particules (2106) ; et
le deuxième processeur de données comprend le module d'addition (310).

11. Système selon l'une quelconque des revendications 1 à 10, dans lequel :
le sol du bâtiment comprend une pluralité de zones et, au cours d'une opération de nettoyage, l'aspirateur robotisé (20) est configuré pour parcourir séquentiellement la pluralité de zones ; et
le premier processeur de données (204) est configuré pour transmettre les données de distribution de tailles de particules de poussière (316) depuis chaque zone après avoir parcouru cette zone.

12. Système selon l'une quelconque des revendications 1 à 11, dans lequel :
le système de traitement de données (204) est configuré pour générer, sur la base des données de distribution de tailles de particules de poussière (316), des instructions qui, lorsqu'elles sont exécutées par un processeur d'un dispositif client (10), amènent un composant d'affichage du dispositif client à afficher une carte de distribution de poussière représentant visuellement les données de distribution de tailles de particules de poussière.

13. Système selon la revendication 12, dans lequel :
le système de traitement de données (204) est configuré pour recevoir une demande de carte de distribution de poussière, et pour générer les instructions en réponse à la réception de la demande de carte de distribution de poussière.

14. Procédé de génération de données de distribution de tailles de particules de poussière (316) indiquant la distribution de particules de poussière sur le sol d'un bâtiment, le procédé comprenant :
au cours d'une opération de nettoyage d'un aspirateur robotisé (20), la génération, par un capteur piézoélectrique (201), d'une pluralité de signaux électriques en réponse à une pluralité respective de vibrations, chaque vibration étant provoquée par une particule de poussière frappant une région de détection d'un trajet d'écoulement d'air de l'aspirateur robotisé ;
la détermination d'informations de localisation indiquant une localisation de l'aspirateur robotisé à l'intérieur du bâtiment ;
pour chaque particule qui frappe une région de détection (203) du capteur piézoélectrique, la détermination d'informations de taille de cette particule de poussière, les informations de taille identifiant une taille de particule, ou une classe de taille de particules à laquelle la particule de poussière appartient ; et
la génération, sur la base de la pluralité de signaux électriques et des informations de localisation déterminées, de données de distribution de tailles de particules de poussière indiquant une distribution de tailles de particules de poussière sur l'ensemble du sol du bâtiment.
